# EUROPEAN PATENT APPLICATION

(11) **EP 4 307 757 A1**
(43) Date of publication of application: **17.01.2024**
(21) Application number: 22783964.4
(22) Date of filing: 01.04.2022
(51) Int. Cl.: H04W 24/08, H04W 52/04

(54) **COMMUNICATION METHOD AND COMMUNICATION APPARATUS**

(30) Priority: 07.04.2021 CN 202110374472
(71) Applicant: HUAWEI TECHNOLOGIES CO., LTD., Shenzhen Guangdong 518129 (CN)
(72) Inventor: HU, Xingxing, Shenzhen, Guangdong 518129 (CN); GENG, Tingting, Shenzhen, Guangdong 518129 (CN); ZENG, Qinghai, Shenzhen, Guangdong 518129 (CN)
(74) Representative: Körber, Martin Hans
(86) International application number: PCT/CN2022/084783
(87) International publication number: WO 2022/213897

(57) **Abstract**

This application provides a communication method and a communication apparatus. The method includes: A first network entity obtains first information, where the first information includes any one of the following: signal measurement results of a terminal device in at least two cells, and a relationship of the signal measurement results of the terminal device in the at least two cells, where the at least two cells include a first cell and a second cell; and the first network entity determines, based on second information, an adjustment manner for adjusting transmit power of the first cell, where the adjustment manner includes one or more of the following: whether to perform adjustment, an adjustment direction, and an adjustment range, where the second information includes the first information and a signal measurement result of a first terminal device in the second cell. According to this application, even if signal quality of the first cell cannot be accurately measured, the adjustment manner for adjusting the transmit power of the first cell can be determined.

## Description

This application claims priority to Chinese Patent Application No. 202110374472.3, filed with the China National Intellectual Property Administration on April 7, 2021 and entitled "COMMUNICATION METHOD AND COMMUNICATION APPARATUS", which is incorporated herein by reference in its entirety.

### TECHNICAL FIELD

This application relates to the communications field, and more specifically, to a communication method and a communication apparatus.

### BACKGROUND

A base station (coverage-layer base station) that manages a coverage-layer cell refers to a base station that provides basic or full signal coverage for a wireless network, that is, a cell managed by the coverage-layer base station is a cell that provides basic coverage for the wireless network. A base station (capacity-layer base station) that manages a capacity-layer cell generally refers to some frequency layers added in some communication hotspot areas to cope with services in these hotspot areas. When a service volume in a coverage area of the capacity-layer base station decreases, the network side may disable some cells in the coverage area of the capacity-layer base station to reduce energy consumption. After a cell is deactivated, the cell does not send a downlink reference signal. When the coverage-layer base station wants to hand over a terminal in a coverage area of a cell of the coverage-layer base station to a deactivated cell due to load, the coverage-layer base station does not know signal quality, in the deactivated cell, of the terminal in the coverage area of the cell of the coverage-layer base station, and therefore cannot determine whether to request to activate or enable the deactivated cell.

Similarly, when transmit power of a downlink reference signal of a cell is reduced, a terminal may fail to measure the cell whose power is reduced, or a measurement result is inaccurate. As a result, the base station cannot determine whether to increase the transmit power of the cell.

### SUMMARY

This application provides a communication method, to achieve an objective of determining an adjustment manner for adjusting transmit power of a cell.

According to a first aspect, a communication method is provided, and the method may include: A first network entity obtains first information, where the first information includes any one of the following: signal measurement results of a terminal device in at least two cells, and a relationship of the signal measurement results of the terminal device in the at least two cells, where the at least two cells include a first cell and a second cell; and the first network entity determines, based on second information, an adjustment manner for adjusting transmit power of the first cell, where the adjustment manner includes one or more of the following: whether to perform adjustment, an adjustment direction, and an adjustment range, where the second information includes the first information and a signal measurement result of a first terminal device in the second cell.

According to the foregoing technical solutions, the first network entity may determine, based on the obtained signal measurement result related to the terminal device and a signal measurement result of a terminal device (that is, the first terminal device) currently served by a base station in the second cell, the adjustment manner for adjusting the transmit power of the first cell. In this way, when the first cell does not send a downlink reference signal or transmit power of the downlink reference signal is relatively low, even if signal quality of the first terminal device in the first cell cannot be accurately measured, the adjustment manner for adjusting the transmit power of the first cell can be determined.

The adjustment direction includes: decreasing the transmit power of the first cell, and increasing the transmit power of the first cell. Increasing the transmit power of the first cell may further include adjusting the first cell from an inactive state to an enabled state. Decreasing the transmit power of the first cell may further include adjusting the first cell from an enabled state to an inactive state.

For example, when the first cell is in an energy saving state, the first network entity determines, based on the second information, the adjustment manner for adjusting the transmit power of the first cell. That the first cell is in an energy saving state may be understood as that working transmit power of the first cell is less than maximum transmit power that can be supported by the first cell, for example, the first cell is in an inactive state, or is in a state in which the transmit power is reduced.

There may be a plurality of methods for determining, by the first network entity, the adjustment manner for adjusting the transmit power of the first cell.

In an example, that the first network entity determines, based on second information, an adjustment manner for adjusting transmit power of the first cell includes: The first network entity predicts signal quality information of the first terminal device in the first cell based on the second information, where the signal quality information includes signal quality and/or whether the signal quality exceeds a first preset threshold; and the first network entity determines, based on the signal quality information of the first terminal device in the first cell, the adjustment manner for adjusting the transmit power of the first cell.

For example, the first network entity predicts the signal quality information of the first terminal device in the first cell based on a first network model. An input parameter of the first network model includes the second information, and an output parameter of the first network model includes the signal quality information of the first terminal device in the first cell.

The first network model may be any one of a neural network model, an artificial intelligence algorithm, a machine learning algorithm, or the like.

In another example, that the first network entity determines, based on second information, an adjustment manner for adjusting transmit power of the first cell includes: The first network entity predicts signal quality information of the first terminal device in the first cell based on the second information, where the signal quality information includes signal quality and/or whether the signal quality exceeds a first preset threshold; and the first network entity determines, based on the signal quality information of the first terminal device in the first cell and third information, the adjustment manner for adjusting the transmit power of the first cell, where the third information includes one or more of the following: a quantity of first terminal devices, a service model of the first terminal device, and first indication information, where the first indication information indicates to hand over the first terminal device to a second network entity, or the first indication information indicates to add the second network entity as a secondary network device of the first terminal device; and the second network entity is a network device to which the first cell belongs.

For example, the first network entity determines, based on a second network model, the adjustment manner for adjusting the transmit power of the first cell. An input parameter of the second network model includes the signal quality information of the first terminal device in the first cell and the third information. An output parameter of the second network model includes one or more of the following: whether to perform adjustment, an adjustment direction, and an adjustment range.

The second network model may be any one of a neural network model, an artificial intelligence algorithm, a machine learning algorithm, or the like.

In still another example, the first network entity determines the adjustment manner for adjusting the transmit power of the first cell based on the first information, the signal measurement result of the first terminal device in the second cell, and one or more of the following: a quantity of first terminal devices, a service model of the first terminal device, and first indication information, where the first indication information indicates to hand over the first terminal device to a second network entity, or the first indication information indicates to add the second network entity as a secondary network device of the first terminal device; and the second network entity is a network device to which the first cell belongs.

For example, the first network entity determines, based on a third network model, the adjustment manner for adjusting the transmit power of the first cell. An input parameter of the third network model includes the first information, the signal measurement result of the first terminal device in the second cell, and one or more of the foregoing. The output parameter of the third network model includes one or more of the following: whether to perform adjustment, an adjustment direction, and an adjustment range.

The third network model may be any one of a neural network model, an artificial intelligence algorithm, a machine learning algorithm, or the like.

With reference to the first aspect, in some implementations of the first aspect, the first network entity receives the first information from at least one third network entity.

With reference to the first aspect, in some implementations of the first aspect, the method further includes: The first network entity sends second indication information to the at least one third network entity, where the second indication information indicates the at least one third network entity to report the first information.

For example, the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

For example, the first preset condition includes: a signal measurement result related to the third network entity exceeds a second preset threshold, and a signal measurement result related to the first network entity exceeds a third preset threshold.

According to the foregoing technical solutions, different content is indicated by using the second indication information, so that the third network entity can report a signal measurement result of a specific terminal device instead of reporting signal measurement results of all terminal devices, thereby reducing overheads of reporting the first information by the third network entity.

With reference to the first aspect, in some implementations of the first aspect, the method further includes: The first network entity receives the signal measurement result of the first terminal device in the second cell from a fourth network entity, where the fourth network entity is a network device accessed by the first terminal device.

With reference to the first aspect, in some implementations of the first aspect, the method further includes: The first network entity sends third indication information to the fourth network entity, where the third indication information indicates the fourth network entity to report a signal measurement result of the first terminal device, and the signal measurement result of the first terminal device includes the signal measurement result of the first terminal device in the second cell.

According to the foregoing technical solutions, the first network entity sends the third indication information to the fourth network entity, to prevent the fourth network entity from reporting an unnecessary signal measurement result to the first network entity.

With reference to the first aspect, in some implementations of the first aspect, the method further includes: The first network entity receives the service model of the first terminal device and/or fourth indication information from the fourth network entity, where the fourth indication information indicates to hand over the first terminal device to the first network entity, or the fourth indication information indicates to add the first network entity as a secondary network device of the first terminal device.

According to the foregoing technical solutions, the fourth network entity sends the service model of the first terminal device and/or the fourth indication information to the first network entity, which helps the first network entity more accurately determine the adjustment manner for adjusting the transmit power of the first cell.

For example, the third indication information further indicates one or more of the following information: indicates to report a signal measurement result that is of the first terminal device and that is related to a specific network entity or cell, indicates to report a signal measurement result of the first terminal device that meets a second preset condition, and indicates a periodicity for reporting a signal measurement result of the first terminal device.

For example, the second preset condition includes: a signal measurement result related to the fourth network entity does not exceed a fourth preset threshold.

According to the foregoing technical solutions, the third indication information indicates different content, so that the fourth network entity can report a signal measurement result of a specific first terminal device instead of reporting signal measurement results of all first terminal devices, thereby reducing overheads of reporting, by the fourth network entity, the signal measurement result of the first terminal device.

With reference to the first aspect, in some implementations of the first aspect, the method further includes: The first network entity receives a request message from the fourth network entity, where the request message is used to request to hand over the first terminal device to the first network entity, or the request message is used to request to add the first network entity as a secondary network device of the first terminal device.

With reference to the first aspect, in some implementations of the first aspect, the method further includes: The first network entity sends fifth indication information to the second network entity, where the fifth indication information indicates one or more of the following: to adjust the transmit power of the first cell, an adjustment direction, and an adjustment range, where the second network entity is a network device to which the first cell belongs.

With reference to the first aspect, in some implementations of the first aspect, the method further includes: The first network entity receives feedback information from the second network entity, where the feedback information includes information about a second terminal device, and the second terminal device is a terminal device that is handed over to the second network entity or adds the second network entity as a secondary network device after the transmit power of the first cell is adjusted.

For example, the second terminal device is handed over from the first network entity to the second network entity, or the second terminal device is a terminal device connected to the first network entity and adds the second network entity as a secondary network device.

According to the foregoing technical solutions, after adjusting the transmit power of the first cell, the second network entity sends the feedback information to the first network entity, so that the first network entity can learn information about a terminal device that is handed over to the second network entity or adds the second network entity as a secondary base station after the transmit power of the first cell is adjusted. This helps the first network entity more accurately determine, based on the feedback information, the adjustment manner for adjusting the transmit power of the first cell.

According to a second aspect, a communication method is provided, and the method may include: A second network entity sends first information to a first network entity, where the first information includes any one of the following: signal measurement results of a terminal device in at least two cells, and a relationship of the signal measurement results of the terminal device in the at least two cells, where the at least two cells include a first cell and a second cell; the second network entity receives fifth indication information from the first network entity, where the fifth indication information indicates one or more of the following: to adjust transmit power of the first cell, an adjustment direction, and an adjustment range; and the second network entity sends feedback information to the first network entity, where the feedback information includes information about a second terminal device, and the second terminal device is a terminal device that is handed over to the second network entity or adds the second network entity as a secondary network device after transmit power of the first cell is adjusted.

According to the foregoing technical solutions, the second network entity sends the signal measurement result related to the terminal device to the first network entity, which helps the first network entity determine, based on the signal measurement result related to the terminal device, an adjustment manner for adjusting the transmit power of the first cell. Further, after adjusting the transmit power of the first cell based on the fifth indication information, the second network entity sends the feedback information to the first network entity, so that the first network entity can learn information about a terminal device that is handed over to the second network entity or adds the second network entity as a secondary base station after the transmit power of the first cell is adjusted. This helps the first network entity more accurately determine, based on the feedback information, the adjustment manner for adjusting the transmit power of the first cell.

For example, the second terminal device is a terminal device handed over from the first network entity to the second network entity, or the second terminal device is a terminal device that accesses the first network entity and adds the second network entity as a secondary network device.

With reference to the second aspect, in some implementations of the second aspect, the method further includes: The second network entity receives second indication information, where the second indication information indicates the second network entity to report the first information.

For example, the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

For example, the first preset condition includes: a signal measurement result related to the second network entity exceeds a second preset threshold, and a signal measurement result related to the first network entity exceeds a third preset threshold.

According to the foregoing technical solutions, different content is indicated by using the second indication information, so that the second network entity can report a signal measurement result of a specific terminal device instead of reporting signal measurement results of all terminal devices, thereby reducing overheads of reporting, by the second network entity, the signal measurement result of the terminal device.

According to a third aspect, a communication method is provided, and the method may include: A fourth network entity sends first information to a first network entity, where the first information includes any one of the following: signal measurement results of a terminal device in at least two cells, and a relationship of the signal measurement results of the terminal device in the at least two cells, where the at least two cells include a first cell and a second cell; the fourth network entity receives third indication information from the first network entity, where the third indication information indicates the fourth network entity to report a signal measurement result of a first terminal device, the signal measurement result of the first terminal device includes a signal measurement result of the first terminal device in the second cell, and the fourth network entity is a network device accessed by the first terminal device; and the fourth network entity sends the signal measurement result of the first terminal device to the first network entity.

According to the foregoing technical solutions, the fourth network entity sends the signal measurement result related to the terminal device and the signal measurement result of the first terminal device in the second cell to the first network entity. This helps the first network entity determine an adjustment manner for adjusting transmit power of the first cell. In addition, when the first cell does not send a downlink reference signal or transmit power of the downlink reference signal is relatively low, even if signal quality of the first terminal device in the first cell cannot be accurately measured, the adjustment manner for adjusting the transmit power of the first cell can be determined.

With reference to the third aspect, in some implementations of the third aspect, the method further includes: The fourth network entity sends a service model of the first terminal device and/or fourth indication information to the first network entity, where the fourth indication information indicates to hand over the first terminal device to the first network entity, or the fourth indication information indicates to add the first network entity as a secondary network device of the first terminal device.

According to the foregoing technical solutions, the fourth network entity sends the service model of the first terminal device and/or the fourth indication information to the first network entity, which helps the first network entity more accurately determine the adjustment manner for adjusting the transmit power of the first cell.

For example, the third indication information further indicates one or more of the following information: indicates to report a signal measurement result that is of the first terminal device and that is related to a specific network entity or cell, indicates to report a signal measurement result that is of the first terminal device and that meets a second preset condition, and indicates a periodicity for reporting a signal measurement result of the first terminal device.

The second preset condition includes: a signal measurement result related to the fourth network entity does not exceed a fourth preset threshold.

According to the foregoing technical solutions, the third indication information indicates different content, so that the fourth network entity can report a signal measurement result of a specific first terminal device instead of reporting signal measurement results of all first terminal devices, thereby reducing overheads of reporting, by the fourth network entity, the signal measurement result of the first terminal device.

With reference to the third aspect, in some implementations of the third aspect, the method further includes: The fourth network entity receives second indication information from the first network entity, where the second indication information indicates the fourth network entity to report the first information.

For example, the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

The first preset condition includes: a signal measurement result related to the fourth network entity exceeds a second preset threshold, and a signal measurement result related to the first network entity exceeds a third preset threshold.

According to the foregoing technical solutions, different content is indicated by using the second indication information, so that the fourth network entity can report a signal measurement result of a specific terminal device instead of reporting signal measurement results of all terminal devices, thereby reducing overheads of reporting, by the fourth network entity, the signal measurement result of the terminal device.

With reference to the third aspect, in some implementations of the third aspect, the method further includes:
The fourth network entity sends a request message to the first network entity, where the request message is used to request to hand over the first terminal device to the first network entity, or the request message is used to request to add the first network entity as a secondary network device of the first terminal device.

According to a fourth aspect, a communication method is provided, and the method may include: A first network entity obtains first information, where the first information includes any one of the following: signal measurement results of a terminal device in at least two cells, and a relationship of the signal measurement results of the terminal device in the at least two cells, where the at least two cells include a first cell and a second cell; the first network entity predicts signal quality information of a first terminal device in the first cell based on second information, where the second information includes the first information and a signal measurement result of the first terminal device in the second cell, and the signal quality information includes signal quality and/or whether the signal quality exceeds a first preset threshold; and the first network entity sends fourth information to a second network entity, where the fourth information includes the signal quality information of the first terminal device in the first cell, the fourth information is used to determine an adjustment manner for adjusting transmit power of the first cell, and the adjustment manner includes one or more of the following: whether to perform adjustment, an adjustment direction, and an adjustment range.

According to the foregoing technical solutions, the first network entity may predict the signal quality information of the first terminal device in the first cell based on the obtained signal measurement result related to the terminal device and a signal measurement result of a terminal device (that is, the first terminal device) currently served by a base station in the second cell. In this way, when the first cell does not send a downlink reference signal or transmit power of the downlink reference signal is relatively low, even if signal quality of the first terminal device in the first cell cannot be accurately measured, signal quality of the first terminal device in the first cell can still be predicted. In addition, the first network entity sends the predicted signal quality information of the first terminal device in the first cell to the second network entity, which helps the second network entity determine the adjustment manner for adjusting the transmit power of the first cell.

For example, the first network entity predicts the signal quality information of the first terminal device in the first cell based on a first network model. An input parameter of the first network model includes the second information, and an output parameter of the first network model includes the signal quality information of the first terminal device in the first cell.

The first network model may be any one of a neural network model, an artificial intelligence algorithm, a machine learning algorithm, or the like.

For example, the fourth information further includes one or more of the following: a quantity of first terminal devices, a service model of the first terminal device, and first indication information, where the first indication information indicates to hand over the first terminal device to the second network entity, or the first indication information indicates to add the second network entity as a secondary network device of the first terminal device.

With reference to the fourth aspect, in some implementations of the fourth aspect, that the first network entity obtains first information includes:
The first network entity receives the first information from at least one third network entity.

With reference to the fourth aspect, in some implementations of the fourth aspect, the method further includes:
The first network entity sends second indication information to the at least one third network entity, where the second indication information indicates the at least one third network entity to report the first information.

For example, the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

The first preset condition includes: a signal measurement result related to the second network entity exceeds a second preset threshold, and a signal measurement result related to the first network entity exceeds a third preset threshold.

According to the foregoing technical solutions, different content is indicated by using the second indication information, so that the third network entity can report a signal measurement result of a specific terminal device instead of reporting signal measurement results of all terminal devices, thereby reducing overheads of reporting, by the third network entity, the signal measurement result of the terminal device.

With reference to the fourth aspect, in some implementations of the fourth aspect, the method further includes:
The first network entity receives the signal measurement result of the first terminal device in the second cell from a fourth network entity, where the fourth network entity is a network device accessed by the first terminal device.

According to a fifth aspect, a communication method is provided, and the method may include: A second network entity receives fourth information from a first network entity, where the fourth information includes signal quality information of a first terminal device in a first cell, the signal quality information of the first terminal device in the first cell is predicted based on second information, the second information includes first information and a signal measurement result of the first terminal device in a second cell, the signal quality information includes signal quality and/or whether the signal quality exceeds a first preset threshold, and the first information includes any one of the following: signal measurement results of a terminal device in at least two cells, and a relationship of the signal measurement results of the terminal device in the at least two cells, where the at least two cells include the first cell and the second cell; the second network entity determines, based on the fourth information, an adjustment manner for adjusting transmit power of the first cell, where the adjustment manner includes one or more of the following: whether to perform adjustment, an adjustment direction, and an adjustment range.

According to the foregoing technical solutions, the second network entity sends a signal measurement result related to a terminal device to the first network entity, so that the first network entity can predict signal quality of the first terminal device in the first cell based on the signal measurement result related to the terminal device. Further, the second network entity may determine, based on the signal quality of the first terminal device in the first cell, the adjustment manner for adjusting the transmit power of the first cell.

For example, the fourth information further includes one or more of the following: a quantity of first terminal devices, a service model of the first terminal device, and first indication information, where the first indication information indicates to hand over the first terminal device to the second network entity, or the first indication information indicates to add the second network entity as a secondary network device of the first terminal device.

With reference to the fifth aspect, in some implementations of the fifth aspect, that the second network entity determines, based on the fourth information, an adjustment manner for adjusting transmit power of the first cell includes: The second network entity determines the adjustment manner for adjusting the transmit power of the first cell based on a second network model, where an input parameter of the second network model includes third information, and an output parameter of the second network model includes one or more of the following: whether to perform adjustment, an adjustment direction, and an adjustment range.

With reference to the fifth aspect, in some implementations of the fifth aspect, the method further includes:
The second network entity receives second indication information, where the second indication information indicates the second network entity to report the first information; and the second network entity sends the first information to the first network entity.

For example, the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

The first preset condition includes: a signal measurement result related to the second network entity exceeds a second preset threshold, and a signal measurement result related to the first network entity exceeds a third preset threshold.

According to the foregoing technical solutions, different content is indicated by using the second indication information, so that the second network entity can report a signal measurement result of a specific terminal device instead of reporting signal measurement results of all terminal devices, thereby reducing overheads of reporting, by the second network entity, the signal measurement result of the terminal device.

According to a sixth aspect, a communication method is provided, and the method may include: A terminal device receives second indication information from a first network entity, where the second indication information indicates one or more of the following: indicates to report a signal measurement result related to a specific network entity or cell, indicates to report a signal measurement result that meets a first preset condition, or indicates a periodicity for reporting a signal measurement result; and the terminal device sends a signal measurement result or a relationship of signal measurement results to the first network entity based on the second indication information.

According to a seventh aspect, a communication apparatus is provided. The communication apparatus may include an obtaining unit and a processing unit. The obtaining unit is configured to obtain first information, where the first information includes any one of the following: signal measurement results of a terminal device in at least two cells, and a relationship of the signal measurement results of the terminal device in the at least two cells, where the at least two cells include a first cell and a second cell. The processing unit is configured to determine, based on the second information, an adjustment manner for adjusting transmit power of the first cell, where the adjustment manner includes one or more of the following: whether to perform adjustment, an adjustment direction, and an adjustment range, where the second information includes the first information and a signal measurement result of a first terminal device in the second cell.

For descriptions of the adjustment direction and when to determine the adjustment manner, refer to the first aspect.

With reference to the seventh aspect, in some implementations of the seventh aspect, the processing unit is specifically configured to: predict signal quality information of the first terminal device in the first cell based on the second information, where the signal quality information includes signal quality and/or whether the signal quality exceeds a first preset threshold; and determine, based on the signal quality information of the first terminal device in the first cell, the adjustment manner for adjusting the transmit power of the first cell.

For more descriptions about predicting the signal quality information of the first terminal device in the first cell, refer to the first aspect.

With reference to the seventh aspect, in some implementations of the seventh aspect, the processing unit is specifically configured to: predict signal quality information of the first terminal device in the first cell based on the second information, where the signal quality information includes signal quality and/or whether the signal quality exceeds a first preset threshold; and determine, based on the signal quality information of the first terminal device in the first cell and third information, the adjustment manner for adjusting the transmit power of the first cell, where the third information includes one or more of the following: a quantity of first terminal devices, a service model of the first terminal device, and first indication information, where the first indication information indicates to hand over the first terminal device to a second network entity, or the first indication information indicates to add the second network entity as a secondary network device of the first terminal device; and the second network entity is a network device to which the first cell belongs.

With reference to the seventh aspect, in some implementations of the seventh aspect, the processing unit is specifically configured to: determine the adjustment manner for adjusting the transmit power of the first cell based on the first information, the signal measurement result of the first terminal device in the second cell, and one or more of the following: a quantity of first terminal devices, a service model of the first terminal device, and first indication information, where the first indication information indicates to hand over the first terminal device to a second network entity, or the first indication information indicates to add the second network entity as a secondary network device of the first terminal device; and the second network entity is a network device to which the first cell belongs.

For more descriptions of how to determine the adjustment manner for adjusting the transmit power of the first cell, refer to the first aspect.

With reference to the seventh aspect, in some implementations of the seventh aspect, the obtaining unit is further configured to receive the first information from at least one third network entity.

With reference to the seventh aspect, in some implementations of the seventh aspect, the obtaining unit is further configured to send second indication information to the at least one third network entity, where the second indication information indicates the at least one third network entity to report the first information.

For more descriptions of the second indication information, refer to the first aspect.

With reference to the seventh aspect, in some implementations of the seventh aspect, the obtaining unit is further configured to receive the signal measurement result of the first terminal device in the second cell from a fourth network entity, where the fourth network entity is a network device accessed by the first terminal device.

With reference to the seventh aspect, in some implementations of the seventh aspect, the obtaining unit is further configured to send third indication information to the fourth network entity, where the third indication information indicates the fourth network entity to report a signal measurement result of the first terminal device, and the signal measurement result of the first terminal device includes the signal measurement result of the first terminal device in the second cell.

For more descriptions of the third indication information, refer to the first aspect.

With reference to the seventh aspect, in some implementations of the seventh aspect, the obtaining unit is further configured to receive a service model of the first terminal device and/or fourth indication information from the fourth network entity, where the fourth indication information indicates to hand over the first terminal device to the communication apparatus, or the fourth indication information indicates to add the communication apparatus as a secondary network device of the first terminal device.

With reference to the seventh aspect, in some implementations of the seventh aspect, the obtaining unit is further configured to receive a request message from the fourth network entity, where the request message is used to request to hand over the first terminal device to the communication apparatus, or the request message is used to request to add the communication apparatus as a secondary network device of the first terminal device.

With reference to the seventh aspect, in some implementations of the seventh aspect, the obtaining unit is further configured to send fifth indication information to the second network entity, where the fifth indication information indicates one or more of the following: to adjust the transmit power of the first cell, an adjustment direction, and an adjustment range, where the second network entity is a network device to which the first cell belongs.

With reference to the seventh aspect, in some implementations of the seventh aspect, the obtaining unit is further configured to receive feedback information from the second network entity, where the feedback information includes information about a second terminal device, and the second terminal device is a terminal device that is handed over to the second network entity or adds the second network entity as a secondary network device after the transmit power of the first cell is adjusted.

For example, the second terminal device is a terminal device handed over from the first network entity to the second network entity, or the second terminal device is a terminal device that accesses the first network entity and adds the second network entity as a secondary network device.

According to an eighth aspect, a communication apparatus is provided. The communication apparatus may include a transceiver unit. The transceiver unit is configured to send first information to a first network entity, where the first information includes any one of the following: signal measurement results of a terminal device in at least two cells, and a relationship of the signal measurement results of the terminal device in the at least two cells, where the at least two cells include a first cell and a second cell. The transceiver unit is further configured to receive fifth indication information from the first network entity, where the fifth indication information indicates one or more of the following: to adjust transmit power of the first cell, an adjustment direction, and an adjustment range. The transceiver unit is further configured to send feedback information to the first network entity, where the feedback information includes information about a second terminal device, and the second terminal device is a terminal device that is handed over to a second network entity or adds the second network entity as a secondary network device after the transmit power of the first cell is adjusted.

For example, the second terminal device is a terminal device handed over from the first network entity to the communication apparatus, or the second terminal device is a terminal device that accesses the first network entity and adds the communication apparatus as a secondary network device.

With reference to the eighth aspect, in some implementations of the eighth aspect, the transceiver unit is further configured to receive second indication information, where the second indication information indicates the communication apparatus to report the first information.

For more descriptions of the second indication information, refer to the second aspect.

According to a ninth aspect, a communication apparatus is provided, and the communication apparatus includes a transceiver unit. The transceiver unit is configured to send first information to a first network entity, where the first information includes any one of the following: signal measurement results of a terminal device in at least two cells, and a relationship of the signal measurement results of the terminal device in the at least two cells, where the at least two cells include a first cell and a second cell. The transceiver unit is further configured to receive third indication information from the first network entity, where the third indication information indicates the communication apparatus to report a signal measurement result of a first terminal device, and the signal measurement result of the first terminal device includes a signal measurement result of the first terminal device in the second cell. The communication apparatus is a network device accessed by the first terminal device. The transceiver unit is further configured to send the signal measurement result of the first terminal device to the first network entity.

For more descriptions of the third indication information, refer to the third aspect.

With reference to the ninth aspect, in some implementations of the ninth aspect, the transceiver unit is further configured to send a service model of the first terminal device and/or fourth indication information to the first network entity, where the fourth indication information indicates to hand over the first terminal device to the first network entity, or the fourth indication information indicates to add the first network entity as a secondary network device of the first terminal device.

With reference to the ninth aspect, in some implementations of the ninth aspect, the transceiver unit is further configured to receive second indication information from the first network entity, where the second indication information indicates the communication apparatus to report the first information.

For more descriptions of the second indication information, refer to the third aspect.

With reference to the ninth aspect, in some implementations of the ninth aspect, the method further includes:
the transceiver unit is further configured to send a request message to the first network entity, where the request message is used to request to hand over the first terminal device to the first network entity, or the request message is used to request to add the first network entity as a secondary network device of the first terminal device.

According to a tenth aspect, a communication apparatus is provided. The communication apparatus may include an obtaining unit and a processing unit. The obtaining unit is configured to obtain first information, where the first information includes any one of the following: signal measurement results of a terminal device in at least two cells, and a relationship of the signal measurement results of the terminal device in the at least two cells, where the at least two cells include a first cell and a second cell. The processing unit is configured to predict signal quality information of a first terminal device in the first cell based on second information, where the second information includes the first information and a signal measurement result of the first terminal device in the second cell, and the signal quality information includes signal quality and/or whether the signal quality exceeds a first preset threshold. The obtaining unit is further configured to send fourth information to a second network entity, where the fourth information includes the signal quality information of the first terminal device in the first cell, the fourth information is used to determine an adjustment manner for adjusting transmit power of the first cell, and the adjustment manner includes one or more of the following: whether to perform adjustment, an adjustment direction, and an adjustment range.

For more descriptions about predicting the signal quality information of the first terminal device in the first cell, refer to the fourth aspect, and for more descriptions about the fourth information, refer to the fourth aspect.

With reference to the tenth aspect, in some implementations of the tenth aspect, the obtaining unit is specifically configured to receive the first information from at least one third network entity.

With reference to the tenth aspect, in some implementations of the tenth aspect, the obtaining unit is further configured to send second indication information to the at least one third network entity, where the second indication information indicates the at least one third network entity to report the first information.

For more descriptions of the second indication information, refer to the fourth aspect.

With reference to the tenth aspect, in some implementations of the tenth aspect, the obtaining unit is further configured to receive the signal measurement result of the first terminal device in the second cell from a fourth network entity, where the fourth network entity is a network device accessed by the first terminal device.

According to an eleventh aspect, a communication apparatus is provided. The communication apparatus may include a transceiver unit and a processing unit. The transceiver unit is configured to receive fourth information from a first network entity, where the fourth information includes signal quality information of a first terminal device in a first cell, the signal quality information of the first terminal device in the first cell is predicted based on second information, the second information includes first information and a signal measurement result of the first terminal device in a second cell, the signal quality information includes signal quality and/or whether the signal quality exceeds a first preset threshold, and the first information includes any one of the following: signal measurement results of a terminal device in at least two cells, and a relationship of the signal measurement results of the terminal device in the at least two cells, where the at least two cells include the first cell and the second cell. The processing unit is configured to determine, based on the fourth information, an adjustment manner for adjusting transmit power of the first cell, where the adjustment manner includes one or more of the following: whether to perform adjustment, an adjustment direction, and an adjustment range.

For more descriptions of how to determine the adjustment manner for adjusting the transmit power of the first cell, refer to the foregoing fifth aspect, and for more descriptions of the fourth information, refer to the foregoing fifth aspect with reference to the eleventh aspect. In some implementations of the eleventh aspect, the transceiver unit is further configured to receive second indication information. The second indication information indicates the second network entity to report the first information.

For more descriptions of the second indication information, refer to the fifth aspect.

According to a twelfth aspect, a communication apparatus is provided. The communication apparatus may include a transceiver unit. The transceiver unit is configured to receive second indication information from a first network entity, where the second indication information indicates one or more of the following: indicates to report a signal measurement result related to a specific network entity or cell, indicates to report a signal measurement result that meets a first preset condition, or indicates a periodicity for reporting a signal measurement result. The transceiver unit is further configured to send a signal measurement result or a relationship of signal measurement results to the first network entity based on the second indication information.

According to a thirteenth aspect, a communication apparatus is provided, including a processor. The processor is coupled to a memory, and may be configured to execute instructions in the memory, to implement the method in the first aspect or the fourth aspect and any possible implementation of the first aspect or the fourth aspect. Optionally, the communication apparatus further includes the memory. Optionally, the communication apparatus further includes a communication interface, and the processor is coupled to the communication interface.

In an implementation, the communication apparatus is a first network entity. When the communication apparatus is the first network entity, the communication interface may be a transceiver or an input/output interface.

In another implementation, the communication apparatus is a chip configured in the first network entity. When the communication apparatus is a chip configured in the first network entity, the communication interface may be an input/output interface.

Optionally, the transceiver may be a transceiver circuit. Optionally, the input/output interface may be an input/output circuit.

According to a fourteenth aspect, a communication apparatus is provided, including a processor. The processor is coupled to a memory, and may be configured to execute instructions in the memory, to implement the method in the second aspect or the fifth aspect and any possible implementation of the second aspect or the fifth aspect. Optionally, the communication apparatus further includes the memory. Optionally, the communication apparatus further includes a communication interface, and the processor is coupled to the communication interface.

In an implementation, the communication apparatus is a second network entity. When the communication apparatus is the second network entity, the communication interface may be a transceiver or an input/output interface.

In another implementation, the communication apparatus is a chip configured in the second network entity. When the communication apparatus is a chip configured in the second network entity, the communication interface may be an input/output interface.

Optionally, the transceiver may be a transceiver circuit. Optionally, the input/output interface may be an input/output circuit.

According to a fifteenth aspect, a communication apparatus is provided, including a processor. The processor is coupled to a memory, and may be configured to execute instructions in the memory, to implement the method in any one of the third aspect and the possible implementations of the third aspect. Optionally, the communication apparatus further includes the memory. Optionally, the communication apparatus further includes a communication interface, and the processor is coupled to the communication interface.

In an implementation, the communication apparatus is a fourth network entity. When the communication apparatus is the fourth network entity, the communication interface may be a transceiver or an input/output interface.

In another implementation, the communication apparatus is a chip configured in the fourth network entity. When the communication apparatus is a chip configured in the fourth network entity, the communication interface may be an input/output interface.

Optionally, the transceiver may be a transceiver circuit. Optionally, the input/output interface may be an input/output circuit.

According to a sixteenth aspect, a communication apparatus is provided, including a processor. The processor is coupled to a memory, and may be configured to execute instructions in the memory, to implement the method in any possible implementation of the sixth aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is a chip disposed in the terminal device, the communication interface may be an input/output interface.

Optionally, the transceiver may be a transceiver circuit. Optionally, the input/output interface may be an input/output circuit.

According to a seventeenth aspect, a processor is provided, including: an input circuit, an output circuit, and a processing circuit. The processing circuit is configured to receive a signal by using the input circuit, and transmit a signal by using the output circuit, so that the processor performs the method in any possible implementation of the first aspect to the sixth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighteenth aspect, a processing apparatus is provided, including a processor and a memory. The processor is configured to read instructions stored in the memory, receive a signal by using a receiver, and transmit a signal by using a transmitter, to perform the method in any possible implementation of the first aspect to the sixth aspect.

Optionally, there are one or more processors, and there are one or more memories.

Optionally, the memory may be integrated with the processor, or the memory and the processor may be disposed separately.

In a specific implementation process, the memory may be a non-transitory (non-transitory) memory, such as a read-only memory (read-only memory, ROM). The memory and the processor may be integrated into one chip, or may be disposed in different chips respectively. A type of the memory and a manner in which the memory and the processor are disposed are not limited in this embodiment of this application.

It should be understood that a related data exchange process, for example, sending indication information, may be a process of outputting indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the eighteenth aspect may be one or more chips. The processor in the processing apparatus may be implemented by using hardware, or may be implemented by using software. When implemented by using hardware, the processor may be a logic circuit, an integrated circuit, or the like. When being implemented by using software, the processor may be a general-purpose processor, and is implemented by reading software code stored in a memory. The memory may be integrated into the processor, or may be located outside the processor and exist independently.

According to a nineteenth aspect, a computer program product is provided, and the computer program product includes: a computer program (which may also be referred to as code or an instruction). When the computer program is run, the computer is enabled to perform the method in any one of the possible implementations of the first aspect to the fifth aspect.

According to a twentieth aspect, a computer-readable storage medium is provided. The computer-readable storage medium stores a computer program (which may also be referred to as code or an instruction). When the computer program runs on a computer, the method in any one of the possible implementations of the first aspect to the fifth aspect is performed.

According to a twenty-first aspect, a communication system is provided, including the foregoing first network entity and second network entity, or including the foregoing first network entity and fourth network entity.

### BRIEF DESCRIPTION OF DRAWINGS

FIG. 1 is a schematic diagram of a communication system applicable to a communication method according to an embodiment of this application;
FIG. 2 is a schematic flowchart of a communication method according to an embodiment of this application;
FIG. 3 is a schematic flowchart of a communication method according to another embodiment of this application;
FIG. 4 is a schematic flowchart of a communication method according to still another embodiment of this application;
FIG. 5 is a schematic flowchart of a communication method according to still another embodiment of this application;
FIG. 6 is a schematic diagram of a communication apparatus according to an embodiment of this application;
FIG. 7 is a schematic block diagram of a communication apparatus according to another embodiment of this application;
FIG. 8 is a schematic block diagram of a communication apparatus according to another embodiment of this application; and
FIG. 9 is a schematic diagram of a chip system according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th Generation, 5G) system or a new radio access technology (new radio access technology, NR), vehicle to everything (vehicle to X, V2X), long term evolution-vehicle (long term evolution-vehicle, LTE-V), internet of vehicles, machine type communication (machine type communication, MTC), internet of things (internet of things, IoT), long term evolution-machine (long term evolution-machine, LTE-M), and machine to machine (machine to machine, M2M), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

In embodiments of this application, a network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home eNodeB (for example, home evolved NodeB, or home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, a gNB or a transmission point (TRP or TP) in 5G, for example, an NR system, one antenna panel or one group of antenna panels (including a plurality of antenna panels) of a base station in a 5G system, or a network node that forms a gNB or a transmission point, for example, a baseband unit (BBU) or a distributed unit (distributed unit, DU).

In some deployments, the network device may include a central unit (central unit, CU) and a DU. The network device may further include an active antenna unit (active antenna unit, AAU). The CU implements some functions of the network device, and the DU implements some functions of the network device. For example, the CU is responsible for processing a non-real-time protocol and service, and implements functions of a radio resource control (radio resource control, RRC) layer, a service data adaptation protocol (service data adaptation protocol, SDAP) layer, and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and functions related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource allocated by the network device (for example, a frequency domain resource, or a spectrum resource) to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a highspeed data transmission service.

In embodiments of this application, the terminal device includes user equipment (user equipment, LTE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), electric energy with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that is worn directly on the body or integrated onto clothes or an accessory of a user. The wearable device is not only a hardware device, but also implements a powerful function through software support, data exchange, and cloud interaction. In a broad sense, the wearable smart device includes a device that has full functions and a large size, and can implement complete or partial functions without relying on a smartphone, for example, a smartwatch or smart glasses; and a device that focuses on only a specific type of application function, and needs to be used with another device such as a smartphone, for example, various smart bands and smart jewelry for physical sign monitoring.

In addition, the terminal device may alternatively be a terminal device in an internet of things system. The internet of things system is an important part of future information technology development. A main characteristic of the internet of things system is to connect objects and networks through a communication technology, thereby realizing an intelligent network of man-machine interconnection and object interconnection. A specific form of the terminal device is not limited in this application.

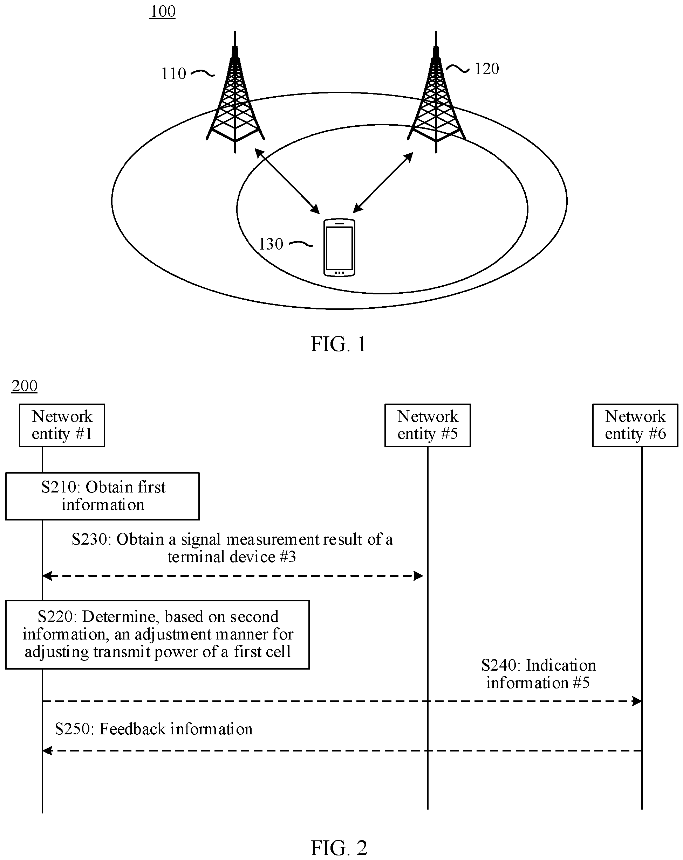

For ease of understanding of embodiments of this application, a communication system applicable to embodiments of this application is first described in detail with reference to FIG. 1. FIG. 1 is a schematic diagram of a communication method applicable to an embodiment of this application. As shown in FIG. 1, the communication system 100 may include at least two network devices, for example, a coverage-layer base station 110 and a capacity-layer base station 120 shown in FIG. 1. The communication system may further include at least one terminal device, for example, a terminal device 130 shown in FIG. 1. The terminal device 130 may be mobile or fixed. Both the coverage-layer base station 110 and the capacity-layer base station 120 are devices that can communicate with the terminal device 130 by using a radio link, and are, for example, base stations or base station controllers. Each base station may provide communication coverage for a specific geographical area, and may communicate with a terminal device located in the coverage area (a cell). As shown in FIG. 1, a coverage area of the coverage-layer base station 110 is greater than a coverage area of the capacity-layer base station 120. In FIG. 1, an example in which the coverage area of the coverage-layer base station 110 includes the coverage area of the capacity-layer base station 120 is used.

It should be understood that in FIG. 1, an example in which the terminal device 130 is connected to both the coverage-layer base station 110 and the capacity-layer base station 120 is used for description, and this should not constitute any limitation on this application. Alternatively, the terminal device 130 may be connected to one of the coverage-layer base station 110 and the capacity-layer base station 120. For example, the terminal device 130 is connected to the coverage-layer base station 110. When load of the coverage-layer base station 110 is relatively high, the terminal device 130 may be handed over from the coverage-layer base station 110 to the capacity-layer base station 120. For another example, the terminal device 130 is connected to the capacity-layer base station. When load of the coverage-layer base station 110 decreases, the terminal device may be handed over from the capacity-layer base station 120 to the coverage-layer base station 110.

FIG. 1 shows an example of a coverage-layer base station, a capacity-layer base station, and a terminal device. Optionally, the communication system 100 may include more coverage-layer base stations or capacity-layer base stations, and a coverage area of each base station may include another quantity of terminal devices. This is not limited in embodiments of this application.

A plurality of antennas may be configured for each of the foregoing communication devices, such as the coverage-layer base station 110, the capacity-layer base station 120, or the terminal device 130 in FIG. 1. The plurality of antennas may include at least one transmit antenna for sending a signal and at least one receive antenna for receiving a signal. In addition, each communication device further additionally includes a transmitter chain and a receiver chain. A person of ordinary skill in the art may understand that the transmitter chain and the receiver chain each include a plurality of components (for example, a processor, a modulator, a multiplexer, a demodulator, a demultiplexer, or an antenna) related to signal transmission and reception. Therefore, the base station and the terminal device may communicate with each other by using a multi-antenna technology.

Optionally, the wireless communication system 100 may further include another network entity such as a network controller or a mobility management entity. This is not limited in embodiments of this application.

A base station (which is denoted as a coverage-layer base station in the following, and may also be referred to as a base-layer base station) that manages a coverage-layer cell refers to a base station that provides basic or full signal coverage for a wireless network, that is, a cell managed by the coverage-layer base station is a cell that provides basic coverage for the wireless network. The coverage layer mainly meets a wireless coverage requirement, and is implemented by a macro base station that meets a site construction condition and is easy to install and maintain. Generally, the coverage-layer base station does not disable a cell managed by the coverage-layer base station. A base station (denoted as a capacity-layer base station in the following) that manages a capacity-layer cell generally refers to some frequency layers added in some communication hotspot areas to cope with services in these hotspot areas. When a service volume in a coverage area of the capacity-layer base station decreases, the network side may disable some cells in the coverage area of the capacity-layer base station to reduce energy consumption. That is, a cell managed by the capacity-layer base station is a cell that provides an extra capacity for the wireless network. The capacity layer is mainly under the coverage layer, uses a macro cell to provide a basic network adapter, and uses a micro cell, a pico cell, a home eNodeB, and the like to increase cell intensive coverage, increase a network capacity, and improve user perception for a hotspot area with a high service capacity requirement.

The capacity-layer base station can decide to disable (or deactivate) a corresponding capacity-layer cell to reduce energy consumption. Generally, a base station that manages a capacity-layer cell may decide whether to disable the corresponding capacity-layer cell based on load of the cell managed by the base station. When a capacity-layer base station decides to disable one or more cells, the capacity-layer base station notifies a neighboring base station of these disabled cells (for example, notifies the neighboring base station that these cells are disabled). When the capacity-layer base station re-enables (or activates) these cells, the capacity-layer base station also notifies the neighboring base station (for example, notifies the neighboring base station that these cells are re-enabled). The coverage-layer base station may request, based on load of the coverage-layer base station (for example, load of a small cell in the coverage-layer base station is relatively high, and some terminals are handed over to the capacity-layer base station to reduce the load of the cell in the coverage-layer base station), the capacity-layer base station to enable a disabled cell. Certainly, an operation administration and maintenance (operation administration and maintenance, OAM) may also make a decision of disabling and re-enabling a cell. After making a decision, the OAM notifies a corresponding base station.

When a cell is deactivated, the cell does not send a downlink reference signal. When the coverage-layer base station wants to hand over a terminal in a coverage area of a cell of the coverage-layer base station to a deactivated cell due to load, the coverage-layer base station does not know signal quality, in the deactivated cell, of the terminal in the coverage area of the cell of the coverage-layer base station. Generally, if the signal quality is relatively poor, the coverage-layer base station does not hand over the terminal to the deactivated cell, and the coverage-layer base station does not request to activate or enable the deactivated cell. If the signal quality is relatively good, the coverage-layer base station may request to activate or enable the deactivated cell, so as to hand over some terminals in the coverage area of the coverage-layer base station to the cell.

When the capacity-layer base station decides whether to re-enable a deactivated cell managed by the capacity-layer base station, or the OAM decides whether to re-enable the deactivated cell, and the capacity-layer base station or the OAM needs to re-enable the deactivated cell for a reason or requirement of the coverage-layer base station or another capacity-layer base station, the capacity-layer base station or the OAM may consider re-enabling the deactivated cell only for some urgent reasons for energy saving.

Similarly, when transmit power of a downlink reference signal of a cell (generally refers to a downlink common reference signal, and may include a synchronization signal block (synchronization signal block, SSB) and a channel state information reference signal (channel state information reference signal, CSI-RS)) is reduced, a terminal may be unable to measure the cell whose power is reduced, or a measurement result is inaccurate. Consequently, it cannot be determined whether the terminal needs to be handed over to the cell whose power is reduced, and whether to increase the transmit power of the cell to cover the terminal that needs to be handed over.

In view of this, this application provides a communication method, to achieve an objective of determining an adjustment manner for adjusting transmit power of a cell.

The following describes in detail the method provided in embodiments of this application with reference to the accompanying drawings.

It should be understood that, for ease of understanding and description, interaction between network entities is used as an example in the following to describe in detail the method provided in embodiments of this application. However, this should not constitute any limitation on an execution body of the method provided in this application. For example, the network entity shown in the following embodiments may be replaced with a component (such as a chip or a circuit) configured in the network entity.

A specific structure of an execution body of the method provided in embodiments of this application is not particularly limited in the following embodiments, provided that the execution body can perform communication according to the method provided in embodiments of this application by running a program that records code of the method provided in embodiments of this application. For example, the method provided in embodiments of this application may be executed by a network entity, or a functional module that is in the network entity and that can invoke and execute a program.

FIG. 2 is a schematic flowchart of a communication method 200 according to an embodiment of this application from a perspective of device interaction. As shown in FIG. 2, the method 200 may include S210 to S250. The steps in the method 200 are described in detail below.

S210: A network entity #1 obtains information #1.

The network entity #1 (an example of a first network entity) may be a base station, for example, may be a coverage-layer base station or a capacity-layer base station. The network entity #1 may alternatively be an OAM. The network entity #1 may alternatively be another entity, for example, an entity with an intelligent control function. This is not limited in this application.

The information #1 (an example of first information) includes any one of the following: signal measurement results of a terminal device in at least two cells, and a relationship of the signal measurement results of the terminal device in the at least two cells, where the at least two cells include a first cell and a second cell. For example, the second cell is a cell other than the first cell in the at least two cells. The first cell is a cell whose transmit power can be adjusted. For example, the first cell is a cell that can be deactivated. In the following, an example in which the first cell includes a cell #1, and the second cell includes a cell #2, or the second cell includes the cell #2 and a cell #3 is used.

A signal measurement result of the terminal device includes a related parameter indicating signal strength of the terminal device in a cell, for example, at least one of reference signal received power (reference signal received power, RSRP), reference signal received quality (reference signal received quality, RSRQ), and the like.

The signal measurement results of the terminal device in the at least two cells include signal measurement results of the at least two cells measured by the terminal device, for example, measurement results obtained by the terminal device by measuring reference signals of the at least two cells, or measurement results obtained by the terminal device by measuring beams (beam) of the at least two cells. The signal measurement results of the terminal device in the at least two cells may further include a measurement result obtained by measuring an uplink signal of the terminal device by a network device accessed by the terminal device. It may be understood that the signal measurement results of the terminal device in the at least two cells may also be referred to as signal measurement results related to the terminal device.

The relationship of the signal measurement results of the terminal device in the at least two cells is a relationship of the signal measurement results of the terminal device in the at least two cells respectively. For example, signal measurement results of downlink reference signals of the cell #1, the cell #2, and the cell #3 measured by a terminal device #1 are RSRP #1, RSRP #2, and RSRP #3 respectively. In this case, a relationship of signal measurement results of the terminal device #1 in at least two cells is a relationship of the RSRP #1, the RSRP #2, and the RSRP #3. For another example, signal measurement results of downlink reference signals of the cell #1, the cell #2, and the cell #3 measured by a terminal device #2 are RSRP #4, RSRP #5, and RSRP #6 respectively. In this case, a relationship of signal measurement results of the terminal device #2 in at least two cells is a relationship of RSRP #4, RSRP #5, and RSRP #6. It may be understood that the relationship of the signal measurement results of the terminal device in the at least two cells may also be referred to as a relationship of the signal measurement results related to the terminal device.

It should be noted that the foregoing signal measurement results of the terminal device in the at least two cells are not limited to signal measurement results of a specific terminal device in the at least two cells, and may be generic (that is, the information #1 is signal measurement results of the at least two cells, and the signal measurement results of the at least two cells are obtained based on signal measurement results of a plurality of terminal devices in the at least two cells). In addition, the foregoing relationship of the signal measurement results of the terminal device in the at least two cells is not limited to a relationship of signal measurement results of a specific terminal device in the at least two cells, and may be generic (that is, the information #1 is signal measurement results of the at least two cells, and the signal measurement results of the at least two cells are obtained based on signal measurement results of a plurality of terminal devices in the at least two cells).

A manner in which the network entity #1 obtains the information #1 is not limited in this embodiment of this application.

In a possible implementation, the network entity #1 determines the information #1 based on a signal measurement result reported by a terminal device in a coverage area.

Optionally, in this implementation, the method 200 may further include: A network entity #1 sends indication information #1 to the terminal device in the coverage area, where the indication information #1 indicates the terminal device to report a signal measurement result in each cell. For example, the network entity #1 may use a message to carry the indication information #1 and send the message to the terminal device. For example, the network entity #1 may send a request message #1 to the terminal device in the coverage area, and the request message #1 includes the indication information #1.

The indication information #1 may indicate the terminal device to report all signal measurement results obtained through measurement. For example, if the terminal device #1 obtains signal measurement results in the cell #1, the cell #2, and the cell #3 through measurement, the terminal device #1 reports the signal measurement results in the cell #1, the cell #2, and the cell #3 that are obtained through measurement to the network entity #1 based on the indication information #1. For another example, if the terminal device #2 obtains signal measurement results in the cell #1, the cell #2, and a cell #4 through measurement, the terminal device #2 reports the signal measurement results in the cell #1, the cell #2, and the cell #4 that are obtained through measurement to the network entity #1 based on the indication information #1.

The indication information #1 may alternatively indicate the terminal device to report all or some signal measurement results obtained through measurement.

In an example, the indication information #1 indicates the terminal device to report a signal measurement result related to a specific network entity or cell. For example, the indication information #1 indicates the terminal device to report signal measurement results related to the network entity #1 and a network entity #2. For another example, the indication information #1 indicates the terminal device to report a signal measurement result related to a cell whose transmit power can be adjusted. For example, the cell whose transmit power can be adjusted is a cell that can be deactivated. For another example, the indication information #1 indicates the terminal device to report signal measurement results related to the cell #1 of the network entity #1 and the cell #2 of the network entity #2. It may be understood that the signal measurement result related to the network entity #1 may include a signal measurement result of the terminal device in each cell of the network entity #1, and the signal measurement result related to the network entity #2 may include a signal measurement result of the terminal device in each cell of the network entity #2. It should be further understood that, in this example, that the cell #1 belongs to the network entity #1, and the cell #2 belongs to the network entity #2 is merely used as an example. It is not limited that the cell #1 definitely belongs to the network entity #1, and the cell #2 definitely belongs to the network entity #2.

In another example, the indication information #1 indicates to report a signal measurement result that meets a preset condition #1. For example, the indication information #1 indicates to report a signal measurement result that is related to the network entity #1 and that exceeds a preset threshold #1, and a signal measurement result that is related to the network entity #2 and that exceeds a preset threshold #2. For example, a signal measurement result that is obtained by the terminal device #1 through measurement in the cell #1 of the network entity #1 exceeds the preset threshold #1, and a signal measurement result that is obtained by the terminal device #1 through measurement in the cell #2 of the network entity #2 exceeds the preset threshold #2. In this case, the terminal device #1 reports, to the network entity #1 based on the indication information #1, the signal measurement results that are obtained through measurement in the cell #1 and the cell #2. For another example, a signal measurement result that is obtained by the terminal device #2 through measurement in the cell #1 of the network entity #1 does not exceed the preset threshold #1, and a signal measurement result that is obtained by the terminal device #2 through measurement in the cell #2 of the network entity #2 exceeds the preset threshold #2. In this case, the terminal device #1 does not report a signal measurement result to the network entity #1 based on the indication information #1. For another example, the indication information #1 indicates to report a signal measurement result that is related to the network entity #1 and that is lower than the preset threshold #1, and a signal measurement result that is related to the network entity #2 and that exceeds the preset threshold #2. For example, a signal measurement result that is obtained by the terminal device #1 through measurement in the cell #1 of the network entity #1 is lower than the preset threshold #1, and a signal measurement result that is obtained by the terminal device #1 through measurement in the cell #2 of the network entity #2 exceeds the preset threshold #2. In this case, the terminal device #1 reports, to the network entity #1 based on the indication information #1, the signal measurement results that are obtained through measurement in the cell #1 and the cell #2. For another example, a signal measurement result that is obtained by the terminal device #2 through measurement in the cell #1 of the network entity #1 exceeds the preset threshold #1, and a signal measurement result that is obtained by the terminal device #2 through measurement in the cell #2 of the network entity #2 is lower than the preset threshold #2. In this case, the terminal device #1 does not report a signal measurement result to the network entity #1 based on the indication information #1.

The indication information #1 may further indicate a periodicity at which the terminal device reports a signal measurement result. For example, the indication information #1 indicates the terminal device to report, to the network entity #1 at a periodicity T, a signal measurement result obtained through measurement.

It should be understood that the indication information #1 may further indicate a plurality of pieces of content. For example, the indication information #1 indicates to report a signal measurement result that meets the preset condition #1, and the indication information #1 indicates a periodicity for reporting a signal measurement result. For another example, the indication information #1 indicates to report a signal measurement result related to a specific network entity or cell, and the indication information #1 indicates to report a signal measurement result that meets the preset condition #1. For another example, the indication information #1 indicates to report a signal measurement result related to a specific network entity or cell, and the indication information #1 indicates a periodicity for reporting a signal measurement result.

It should be further understood that, in this implementation, the network entity #1 may send the indication information #1 to all terminal devices in the coverage area, or may send the indication information #1 to some terminal devices in the coverage area. This is not limited in this application.

Further, the network entity #1 determines the information #1 based on the received signal measurement result of the terminal device in each cell.

For example, the network entity #1 receives signal measurement results in the cell #1, the cell #2, and the cell #3 that are reported by M terminal devices. The network entity #1 determines that the information #1 includes the signal measurement results of the M terminal devices in the cell #1, the cell #2, and the cell #3. Alternatively, the network entity #1 determines, based on the signal measurement results in the cell #1, the cell #2, and the cell #3 that are reported by the M terminal devices, that the information #1 includes a relationship (denoted as a relationship #1) between the signal measurement results of the terminal device in the cell #1, the cell #2, and the cell #3. A form of the relationship #1 may be: when signal quality of a terminal device in the cell #1 falls within a range #1, and signal quality of a terminal device in the cell #2 falls within a range #2, signal quality of a terminal device in the cell #3 falls within a range #3. M is a positive integer. The form of the relationship #1 may alternatively be a network model #1. An input of the network model #1 includes signal measurement results of terminal devices in the cell #2 and the cell #3, and an output of the network model includes a signal measurement result of a terminal device in the cell #1. The network model #1 may be a neural network model, an artificial intelligence (artificial intelligence, AI) algorithm, or a machine learning (machine learning, ML) algorithm. This is not limited in this application.

In another possible implementation, the network entity #1 determines the information #1 based on a relationship of signal measurement results that is reported by the terminal device in the coverage area, and the information #1 includes the relationship of the signal measurement results of the terminal device in the at least two cells.

Optionally, in this implementation, the method 200 may further include: The network entity #1 sends indication information #1 to the terminal device in the coverage area, where the indication information #1 indicates the terminal device to report a relationship of signal measurement results in all cells. For example, the network entity #1 may use a message to carry the indication information #1 and send the message to the terminal device. For example, the network entity #1 may send a request message #1 to the terminal device in the coverage area, and the request message #1 includes the indication information #1.

The indication information #1 may indicate the terminal device to report a relationship of all signal measurement results obtained through measurement. For example, if the terminal device #1 obtains signal measurement results in the cell #1, the cell #2, and the cell #3 through measurement, the terminal device #1 reports a relationship of the signal measurement results of the terminal device #1 in the cell #1, the cell #2, and the cell #3 to the network entity #1 based on the indication information #1. For another example, if the terminal device #2 obtains signal measurement results in the cell #1, the cell #2, and the cell #4 through measurement, the terminal device #2 reports a relationship of the signal measurement results of the terminal device #2 in the cell #1, the cell #2, and the cell #4 to the network entity #1 based on the indication information #1.

The indication information #1 may further indicate the terminal device to report a relationship of all or some signal measurement results obtained through measurement.

In an example, the indication information #1 indicates the terminal device to report a relationship of signal measurement results related to a specific network entity or cell. For example, the indication information #1 indicates the terminal device to report a relationship of signal measurement results related to the network entity #1 and the network entity #2. For another example, the indication information #1 indicates the terminal device to report a relationship of signal measurement results related to a cell whose transmit power can be adjusted. For example, the cell whose transmit power can be adjusted is a cell that can be deactivated. For another example, the indication information #1 indicates the terminal device to report a relationship of signal measurement results related to the cell #1 of the network entity #1 and the cell #2 of the network entity #2. It may be understood that the relationship of the signal measurement results related to the network entity #1 and the network entity #2 may include a relationship between a signal measurement result of the terminal device in each cell of the network entity #1 and a signal measurement result of the terminal device in each cell of the network entity #2. It should be further understood that, in this example, that the cell #1 belongs to the network entity #1, and the cell #2 belongs to the network entity #2 is merely used as an example. It is not limited that the cell #1 definitely belongs to the network entity #1, and the cell #2 definitely belongs to the network entity #2.

In another example, the indication information #1 indicates to report a relationship of signal measurement results that meet the preset condition #1. For example, the indication information #1 indicates to report a relationship of a signal measurement result that is related to the network entity #1 and that exceeds a preset threshold #1 and a signal measurement result that is related to the network entity #2 and that exceeds a preset threshold #2. For example, a signal measurement result that is obtained by the terminal device #1 through measurement in the cell #1 of the network entity #1 exceeds the preset threshold #1, and a signal measurement result that is obtained by the terminal device #1 through measurement in the cell #2 of the network entity #2 exceeds the preset threshold #2. In this case, the terminal device #1 reports, to the network entity #1 based on the indication information #1, a relationship of the signal measurement results that are obtained through measurement in the cell #1 and the cell #2. For another example, a signal measurement result that is obtained by the terminal device #2 through measurement in the cell #1 of the network entity #1 does not exceed the preset threshold #1, and a signal measurement result that is obtained by the terminal device #2 through measurement in the cell #2 of the network entity #2 exceeds the preset threshold #2. In this case, the terminal device #1 does not report a relationship of signal measurement results to the network entity #1 based on the indication information #1. For example, the indication information #1 indicates to report a relationship of a signal measurement result that is related to the network entity #1 and that is lower than the preset threshold #1 and a signal measurement result that is related to the network entity #2 and that exceeds the preset threshold #2. For example, a signal measurement result that is obtained by the terminal device #1 through measurement in the cell #1 of the network entity #1 is lower than the preset threshold #1, and a signal measurement result that is obtained by the terminal device #1 through measurement in the cell #2 of the network entity #2 exceeds the preset threshold #2. In this case, the terminal device #1 reports, to the network entity #1 based on the indication information #1, a relationship of the signal measurement results that are obtained through measurement in the cell #1 and the cell #2. For another example, a signal measurement result that is obtained by the terminal device #2 through measurement in the cell #1 of the network entity #1 exceeds the preset threshold #1, and a signal measurement result that is obtained by the terminal device #2 through measurement in the cell #2 of the network entity #2 is lower than the preset threshold #2. In this case, the terminal device #1 does not report a relationship of signal measurement results to the network entity #1 based on the indication information #1.

The indication information #1 may further indicate a periodicity at which the terminal device reports a relationship of signal measurement results. For example, the indication information #1 indicates the terminal device to report, to the network entity #1 at a periodicity T, a relationship of signal measurement results obtained through measurement.

It should be understood that the indication information #1 may indicate a plurality of pieces of content. For example, the indication information #1 indicates to report a relationship of signal measurement results that meet the preset condition #1, and the indication information #1 indicates a periodicity for reporting a relationship of signal measurement results. For another example, the indication information #1 indicates to report a signal measurement result related to a specific network entity or cell, and the indication information #1 indicates to report a signal measurement result that meets the preset condition #1. For another example, the indication information #1 indicates to report a signal measurement result related to a specific network entity or cell, and the indication information #1 indicates a periodicity for reporting a signal measurement result.

It should be further understood that, in this implementation, the network entity #1 may send the indication information #1 to all terminal devices in the coverage area, or may send the indication information #1 to some terminal devices in the coverage area. This is not limited in this application.

Further, the network entity #1 determines the information #1 based on the received relationship of signal measurement results of the terminal device in each cell.

For example, the network entity #1 receives a relationship of signal measurement results in the cell #1, the cell #2, and the cell #3 that are reported by M terminal devices. In this case, the network entity #1 determines, based on the relationship of the signal measurement results in the cell #1, the cell #2, and the cell #3 that are reported by the M terminal devices, that the information #1 includes the relationship (denoted as a relationship #1) of the signal measurement results of the terminal devices in the cell #1, the cell #2, and the cell #3. A form of the relationship #1 may be: when signal quality of a terminal device in the cell #1 falls within a range #1, and signal quality of a terminal device in the cell #2 falls within a range #2, signal quality of a terminal device in the cell #2 falls within a range #3. The form of the relationship #1 may alternatively be a network model #1. An input of the network model #1 includes signal measurement results of terminal devices in the cell #2 and the cell #3, and an output of the network model includes a signal measurement result of a terminal device in the cell #1. The network model #1 may be a neural network model, an AI algorithm, or an ML algorithm. This is not limited in this application.

In still another possible implementation, the network entity #1 determines the information #1 based on a signal measurement result related to a terminal device that is reported by at least one network entity #3 (an example of a third network entity). The signal measurement result related to a terminal device that is reported by the network entity #3 to the network entity #1 includes: a signal measurement result obtained by a terminal device in a coverage area of the network entity #3 by measuring a reference signal or a beam of each cell, and/or a signal measurement result obtained by the network entity #3 by measuring an uplink signal of the terminal device in the coverage area.

Optionally, in this implementation, the method 200 may further include: A network entity #4 sends indication information #2 (an example of second indication information) to the at least one network entity #3, where the indication information #2 indicates the at least one network entity #3 to report the signal measurement result related to a terminal device to the network entity #1. The network entity #4 and the network entity #1 may be a same network entity, or may be different network entities. This is not limited in this application. It should be understood that when the network entity #4 is different from the network entity #1, the indication information #2 includes an identifier of the network entity #1, to indicate the at least one network entity #3 to report the signal measurement result related to a terminal device to the network entity #1. For example, the network entity #4 may use a message to carry the indication information #2, and send the message to the at least one network entity #3. For example, the network entity #4 may send a request message #2 to the at least one network entity #3, where the request message #2 includes the indication information #2.

The indication information #2 may indicate the at least one network entity #3 to report all signal measurement results related to a terminal device to the network entity #1.

The indication information #2 may further indicate the at least one network entity #3 to report all or some signal measurement results related to a terminal device.

In an example, the indication information #2 indicates the at least one network entity #3 to report a signal measurement result related to a specific network entity or cell. For example, the indication information #2 indicates the at least one network entity #3 to report signal measurement results related to the network entity #1 and the network entity #3. For another example, the indication information #2 indicates the at least one network entity #3 to report a signal measurement result related to a cell whose transmit power can be adjusted. For example, the cell whose transmit power can be adjusted is a cell that can be deactivated. For example, only the cell #1 and the cell #2 of the network entity #3 can be deactivated. In this case, the network entity #3 reports only signal measurement results related to the cell #1 and the cell #2. For another example, the indication information #2 indicates the at least one network entity #3 to report signal measurement results related to the cell #1 of the network entity #1 and the cell #2 of the network entity #2. It may be understood that the signal measurement result related to the network entity #1 may include a signal measurement result, in each cell of the network entity #1, of a terminal device in a coverage area of the network entity #3; and the signal measurement result related to the network entity #2 may include a signal measurement result, in each cell of the network entity #2, of the terminal device in the coverage area of the network entity #3. It should be further understood that, in this example, that the cell #1 belongs to the network entity #1, and the cell #2 belongs to the network entity #3 is merely used as an example. It is not limited that the cell #1 definitely belongs to the network entity #1, and the cell #2 definitely belongs to the network entity #3.

In another example, the indication information #2 indicates the at least one network entity #3 to report a signal measurement result that meets a preset condition #1 (an example of a first preset condition). For example, the indication information #2 indicates the at least one network entity #3 to report a signal measurement result that is related to the network entity #3 and that exceeds a preset threshold #1 (an example of a second preset threshold) and a signal measurement result that is related to the network entity #1 and that exceeds a preset threshold #2 (an example of a third preset threshold). For example, a signal measurement result, in the cell #1 of the network entity #1, of the terminal device #1 under the network entity #3 exceeds the preset threshold #1, and a signal measurement result of the terminal device #1 in the cell #2 of the network entity #2 exceeds the preset threshold #2. In this case, the network entity #3 reports the signal measurement results related to the terminal device #1 to the network entity #1 based on the indication information #2. For another example, a signal measurement result, in the cell #1 of the network entity #1, of the terminal device #2 under the network entity #3 does not exceed the preset threshold #1, and a signal measurement result of the terminal device #2 in the cell #2 of the network entity #2 exceeds the preset threshold #2. In this case, the network entity #3 does not report the signal measurement result related to the terminal device #2 to the network entity #1 based on the indication information #2. For another example, the indication information #1 indicates to report a signal measurement result that is related to the network entity #3 and that is lower than the preset threshold #1, and a signal measurement result that is related to the network entity #1 and that exceeds the preset threshold #2. For example, a signal measurement result, in the cell #1 of the network entity #3, that is obtained by the terminal device #1 under the network entity #3 through measurement is lower than the preset threshold #1, and a signal measurement result, in the cell #2 of the network entity #1, that is obtained by the terminal device #1 under the network entity #3 through measurement exceeds the preset threshold #2. In this case, the terminal device #1 under the network entity #3 reports, to the network entity #1 based on the indication information #2, the signal measurement results that are obtained through measurement in the cell #1 and the cell #2. For another example, a signal measurement result, in the cell #1 of the network entity #3, that is obtained by the terminal device #2 under the network entity #3 through measurement exceeds the preset threshold #1, and a signal measurement result, in the cell #2 of the network entity #2, that is obtained by the terminal device #2 under the network entity #3 through measurement is lower than the preset threshold #2. In this case, the terminal device #1 under the network entity #3 does not report a signal measurement result to the network entity #1 based on the indication information #2.

The indication information #2 may further indicate a periodicity at which the at least one network entity #3 reports a signal measurement result related to a terminal device. For example, the indication information #2 indicates the at least one network entity #3 to report a signal measurement result related to a terminal device to the network entity #1 at a periodicity T.

It should be understood that the indication information #2 may indicate a plurality of pieces of content. For example, the indication information #2 indicates to report a signal measurement result that is of a terminal device and that meets the preset condition #1, and the indication information #2 indicates a periodicity for reporting a signal measurement result of a terminal device. For another example, the indication information #2 indicates to report a signal measurement result that is of a terminal device and that is related to a specific network entity or cell, and the indication information #2 indicates to report a signal measurement result that is of a terminal device and that meets the preset condition #1. For another example, the indication information #2 indicates to report a signal measurement result that is of a terminal device and that is related to a specific network entity or cell, and the indication information #2 indicates a periodicity for reporting a signal measurement result related to a terminal device.

Optionally, the indication information #2 may further include an identifier of a terminal device, to indicate the at least one network entity #3 to report a signal measurement result related to a specific terminal device. For example, the indication information #2 includes an identifier of the terminal device #1, and the network entity #3 reports a signal measurement result related to the terminal device #1 to the network entity #1 based on the indication information #2. For example, the network entity #3 reports signal measurement results of the terminal device #1 in the cell #1 and the cell #2 to the network entity #1.

Further, the network entity #1 determines the information #1 based on the signal measurement result related to a terminal device that is reported by the at least one network entity #3.

For example, the network entity #3 reports signal measurement results of M terminal devices in the cell #1 and the cell #2 to the network entity #1. In this case, the network entity #1 determines that the information #1 includes the signal measurement results of the M terminal devices in the cell #1 and the cell #2. Alternatively, the network entity #1 determines, based on the signal measurement results of the M terminal devices in the cell #1 and the cell #2, that the information #1 includes a relationship (denoted as a relationship #2) of the signal measurement results of the terminal devices in the cell #1 and the cell #2. A form of the relationship #2 may be: when signal quality of a terminal device in the cell #1 falls within a range #1, signal quality of a terminal device in the cell #2 falls within a range #2. A form of the relationship #2 may alternatively be a network model #2. An input of the network model #2 includes a signal measurement result of a terminal device in the cell #2, and an output of the network model includes a signal measurement result of a terminal device in the cell #1. The network model #2 may be a neural network model, an AI algorithm, or an ML algorithm. This is not limited in this application.

For another example, a network entity #3 reports signal measurement results of M terminal devices in the cell #1, the cell #2, and the cell #3 to the network entity #1; and another network entity #3 reports signal measurement results of N terminal devices in the cell #1, the cell #2, and the cell #3 to the network entity #1. In this case, the network entity #1 determines that the information #1 includes signal measurement results of the M+N terminal devices in the cell #1, the cell #2, and the cell #3. Alternatively, the network entity #1 determines, based on the signal measurement results of the M+N terminal devices in the cell #1, the cell #2, and the cell #3, that the information #1 includes a relationship (denoted as a relationship #1) of the signal measurement results of the terminal devices in the cell #1, the cell #2, and the cell #3. A form of the relationship #1 may be: when signal quality of a terminal device in the cell #1 falls within a range #1, and signal quality of a terminal device in the cell #2 falls within a range #2, signal quality of a terminal device in the cell #2 falls within a range #3. N is a positive integer. The form of the relationship #1 may alternatively be a network model #1. An input of the network model #1 includes signal measurement results of terminal devices in the cell #2 and the cell #3, and an output of the network model includes a signal measurement result of a terminal device in the cell #1. The network model #1 may be a neural network model, an AI algorithm, or an ML algorithm. This is not limited in this application.

In yet another possible implementation, the network entity #1 determines the information #1 based on a relationship of signal measurement results related to a terminal device that is reported by at least one network entity #3. The information #1 includes a relationship of signal measurement results of the terminal device in at least two cells.

Optionally, in this implementation, the method 200 may further include: The network entity #4 sends indication information #2 to the at least one network entity #3, where the indication information #2 indicates the at least one network entity #3 to report, to the network entity #1, the relationship of signal measurement results related to a terminal device. The network entity #4 and the network entity #1 may be a same network entity, or may be different network entities. This is not limited in this application. It should be understood that when the network entity #4 is different from the network entity #1, the indication information #2 includes an identifier of the network entity #1, to indicate the at least one network entity #3 to report the signal measurement result related to a terminal device to the network entity #1. For example, the network entity #4 may use a message to carry the indication information #2, and send the message to the at least one network entity #3. For example, the network entity #4 may send a request message #2 to the at least one network entity #3, where the request message #2 includes the indication information #2.

The indication information #2 may indicate the at least one network entity #3 to report a relationship of all signal measurement results related to a terminal device to the network entity #1.

The indication information #2 may further indicate the at least one network entity #3 to report a relationship of all or some signal measurement results related to a terminal device.

In an example, the indication information #2 may indicate the at least one network entity #3 to report a relationship of signal measurement results related to a specific network entity or cell. For example, the indication information #2 indicates the at least one network entity #3 to report a relationship of signal measurement results related to the network entity #1 and the network entity #3. For another example, the indication information #2 indicates the at least one network entity #3 to report a relationship of signal measurement results related to a cell whose transmit power can be adjusted. For example, the cell whose transmit power can be adjusted is a cell that can be deactivated. For example, only the cell #1 and the cell #2 of the network entity #3 can be deactivated. In this case, the network entity #3 reports a relationship of only signal measurement results related to the cell #1 and the cell #2. For another example, the indication information #2 indicates the at least one network entity #3 to report a relationship of signal measurement results related to the cell #1 of the network entity #1 and the cell #2 of the network entity #2. It may be understood that the relationship of the signal measurement results related to the network entity #1 and the network entity #2 may include a relationship between a signal measurement result, in each cell of the network entity #1, of a terminal device in the coverage area of the network entity #3 and a signal measurement result in each cell of the network entity #3. It should be further understood that, in this example, that the cell #1 belongs to the network entity #1, and the cell #2 belongs to the network entity #3 is merely used as an example. It is not limited that the cell #1 definitely belongs to the network entity #1, and the cell #2 definitely belongs to the network entity #3.

In another example, the indication information #2 may indicate the at least one network entity #3 to report a relationship of signal measurement results that meet a preset condition #1. For example, the indication information #2 indicates the at least one network entity #3 to report a relationship of a signal measurement result that is related to the network entity #3 and that exceeds a preset threshold #1 and a signal measurement result that is related to the network entity #1 and that exceeds a preset threshold #2. For example, a signal measurement result, in the cell #1 of the network entity #1, of the terminal device #1 under the network entity #3 exceeds the preset threshold #1, and a signal measurement result of the terminal device #1 in the cell #2 of the network entity #2 exceeds the preset threshold #2. In this case, the network entity #3 reports a relationship of the signal measurement results related to the terminal device #1 to the network entity #1 based on the indication information #2. For another example, a signal measurement result, in the cell #1 of the network entity #1, of the terminal device #2 under the network entity #3 does not exceed the preset threshold #1, and a signal measurement result of the terminal device #2 in the cell #2 of the network entity #2 exceeds the preset threshold #2. In this case, the network entity #3 does not report a relationship of the signal measurement results related to the terminal device #2 to the network entity #1 based on the indication information #2. For another example, the indication information #2 indicates to report a relationship of a signal measurement result that is related to the network entity #3 and that is lower than the preset threshold #1 and a signal measurement result that is related to the network entity #1 and that exceeds the preset threshold #2. For example, a signal measurement result, in the cell #1 of the network entity #3, that is obtained by the terminal device #1 under the network entity #3 through measurement is lower than the preset threshold #1, and a signal measurement result, in the cell #2 of the network entity #1, that is obtained by the terminal device #1 under the network entity #3 through measurement exceeds the preset threshold #2. In this case, the terminal device #1 under the network entity #3 reports, to the network entity #1 based on the indication information #2, a relationship of the signal measurement results that are obtained through measurement in the cell #1 and the cell #2. For another example, a signal measurement result, in the cell #1 of the network entity #3, that is obtained by the terminal device #2 under the network entity #3 through measurement exceeds the preset threshold #1, and a signal measurement result, in the cell #2 of the network entity #2, that is obtained by the terminal device #2 under the network entity #3 through measurement is lower than the preset threshold #2. In this case, the terminal device #1 under the network entity #3 does not report a relationship of signal measurement results to the network entity #1 based on the indication information #2.

The indication information #2 further indicates a periodicity at which the at least one network entity #3 reports a relationship of signal measurement results related to a terminal device. For example, the indication information #2 indicates the at least one network entity #3 to report a relationship of signal measurement results related to a terminal device to the network entity #1 at a periodicity T.

It should be understood that the indication information #2 may indicate a plurality of pieces of content. For example, the indication information #2 indicates to report a relationship of signal measurement results of a terminal device that meet the preset condition #1, and the indication information #2 indicates a periodicity for reporting a relationship of signal measurement results of a terminal device. For another example, the indication information #2 indicates to report a relationship of signal measurement results of a terminal device that are related to a specific network entity or cell, and the indication information #2 indicates to report a relationship of signal measurement results of a terminal device that meet the preset condition #1. For another example, the indication information #2 indicates to report a relationship of signal measurement results of a terminal device that are related to a specific network entity or cell, and the indication information #2 indicates a periodicity for reporting a relationship of signal measurement results related to a terminal device.

Optionally, the indication information #2 may further include an identifier of a terminal device, to indicate the at least one network entity #3 to report a relationship of signal measurement results related to a specific terminal device. For example, the indication information #2 includes an identifier of the terminal device #1, and the network entity #3 reports a relationship of signal measurement results related to the terminal device #1 to the network entity #1 based on the indication information #2. For example, the network entity #3 reports a relationship of signal measurement results of the terminal device #1 in the cell #1 and the cell #2 to the network entity #1.

Further, the network entity #1 determines the information #1 based on the relationship of signal measurement results related to a terminal device that is reported by the at least one network entity #3.

For example, the network entity #3 reports a relationship of signal measurement results of M terminal devices in the cell #1 and the cell #2 to the network entity #1. In this case, the network entity #1 determines, based on the relationship of the signal measurement results of the M terminal devices in the cell #1 and the cell #2, that the information #1 includes the relationship (denoted as a relationship #2) of the signal measurement results of the terminal devices in the cell #1 and the cell #2. A form of the relationship #2 may be: when signal quality of a terminal device in the cell #1 falls within a range #1, signal quality of a terminal device in the cell #2 falls within a range #2. A form of the relationship #2 may alternatively be a network model #2. An input of the network model #2 includes a signal measurement result of a terminal device in the cell #2, and an output of the network model includes a signal measurement result of a terminal device in the cell #1. The network model #2 may be a neural network model, an AI algorithm, or an ML algorithm. This is not limited in this application.

For another example, a network entity #3 reports a relationship of signal measurement results of M terminal devices in the cell #1, the cell #2, and the cell #3 to the network entity #1; and another network entity #3 reports a relationship of signal measurement results of N terminal devices in the cell #1, the cell #2, and the cell #3 to the network entity #1. In this case, the network entity #1 determines, based on a relationship of signal measurement results of the M+N terminal devices in the cell #1 and the cell #2, that the information #1 includes a relationship (denoted as a relationship #1) of the signal measurement results of the terminal devices in the cell #1, the cell #2, and the cell #3. A form of the relationship #1 may be: when signal quality of a terminal device in the cell #1 falls within a range #1, and signal quality of a terminal device in the cell #2 falls within a range #2, signal quality of a terminal device in the cell #2 falls within a range #3. The form of the relationship #1 may alternatively be a network model #1. An input of the network model #1 includes signal measurement results of terminal devices in the cell #2 and the cell #3, and an output of the network model includes a signal measurement result of a terminal device in the cell #1. The network model #1 may be a neural network model, an AI algorithm, or an ML algorithm. This is not limited in this application.

S220: The network entity #1 determines, based on information #2, an adjustment manner for adjusting the transmit power of the first cell.

The information #2 (an example of second information) includes the information #1 and a signal measurement result of a terminal device #3 (an example of a first terminal device) in the second cell. The terminal device #3 may be the same as the foregoing terminal device #1/terminal device #2, or may be different from the terminal device #1/terminal device #2. This is not limited in this application. The following uses an example in which the first cell includes the cell #1, an example in which the second cell includes the cell #2, and an example in which the information #1 includes signal measurement results (or a relationship of signal measurement results) of a terminal device in the cell #1 and the cell #2.

If the network entity #1 is a coverage-layer base station, the terminal device #3 may be a terminal device connected to the network entity #1. For example, the terminal device #3 is a terminal device connected to the network entity #1 after the cell #1 is deactivated or the transmit power is reduced. If the network entity #1 is a capacity-layer base station or an OAM, the terminal device #3 may be a terminal device connected to a specific base station (for example, a network entity #5). For example, the terminal device #3 is a terminal device connected to the specific base station after the cell #1 is deactivated or the transmit power is reduced. There are one or more terminal devices #3.

When the terminal device #3 is not connected to the network entity #1, the method 200 may further include S230: The network entity #1 obtains a signal measurement result of the terminal device #3 from the network entity #5. The network entity #5 is a base station connected to the terminal device #3.

For example, S230 may include:
S231: The network entity #1 sends indication information #3 (an example of third indication information) to the network entity #5 (an example of a fourth network entity), where the indication information #3 indicates the network entity #5 to report the signal measurement result of the terminal device #3, and the signal measurement result of the terminal device #3 includes the signal measurement result of the terminal device #3 in the cell #2. For example, the network entity #1 may use a message to carry the indication information #3 and send the message to the network entity #5. For example, the network entity #1 may send a request message #3 to the network entity #5, where the request message #3 includes the indication information #3.
S232: The network entity #1 receives the signal measurement result of the terminal device #3 from the network entity #5. The signal measurement result of the terminal device #3 includes a measurement result obtained by the terminal device #3 by measuring a reference signal of each cell, may further include a beam measurement result of each cell, and may further include a measurement result obtained by the network entity #5 by measuring an uplink signal of the terminal device #3.

The indication information #3 may indicate the network entity #5 to report signal measurement results of all terminal devices connected to the network entity #5.

The indication information #3 may further indicate the network entity #5 to report signal measurement results of all or some terminal devices connected to the network entity #5.

In an example, the indication information #3 may indicate to report a signal measurement result that is of the terminal device #3 and that is related to a specific network entity or cell. For example, the indication information #3 indicates the network entity #5 to report signal measurement results of the terminal device #3 that are related to the network entity #1 and the network entity #5. For another example, the indication information #3 indicates the network entity #5 to report a signal measurement result that is of the terminal device #3 and that is related to the cell #2. It may be understood that the signal measurement result related to the network entity #1 may include a signal measurement result of the terminal device #3 in each cell of the network entity #1. The signal measurement result related to the network entity #5 may include a signal measurement result of the terminal device #3 in each cell of the network entity #5.

In another example, the indication information #3 may indicate to report a signal measurement result that is of the terminal device #3 and that meets a preset condition #2 (an example of a second preset condition). For example, the indication information #3 indicates the network entity #5 to report a signal measurement result that is related to a cell in the network entity #5 and that is lower than a preset threshold #3 (an example of a fourth preset threshold). For example, if a signal measurement result of a terminal device #3 in the cell #2 of the network entity #5 is less than the preset threshold #3, the network entity #5 reports the signal measurement result related to the terminal device #3 to the network entity #1 based on the indication information #3. For another example, if a signal measurement result of a terminal device #3 in the cell #2 of the network entity #5 is not lower than the preset threshold #3, the network entity #3 does not report the signal measurement result related to the terminal device #3 to the network entity #1 based on the indication information #3.

The indication information #3 may further indicate a periodicity for reporting a signal measurement result of the terminal device #3. For example, the indication information #3 indicates the network entity #5 to report a signal measurement result of the terminal device #3 to the network entity #1 at a periodicity T.

It should be understood that the indication information #3 may indicate a plurality of pieces of content. For example, the indication information #3 indicates to report a signal measurement result that meets the preset condition #2, and the indication information #3 indicates the periodicity for reporting a signal measurement result of the terminal device #3. For another example, the indication information #3 indicates to report a signal measurement result related to a specific network entity or cell, and the indication information #3 indicates to report a signal measurement result that meets the preset condition #2. For another example, the indication information #3 indicates to report a signal measurement result related to a specific network entity or cell, and the indication information #3 indicates a periodicity for reporting a signal measurement result.

Optionally, S230 may further include: The network entity #1 receives a service model of the terminal device #3 and/or indication information #4 (an example of first indication information or fourth indication information) from the network entity #5. The service model of the terminal device #3 may include a maximum rate, a minimum rate, a quality of service (quality of service, QoS) parameter, possible duration of a service, and the like that are required by the terminal device #3. The indication information #4 indicates to hand over the terminal device #3 to a network entity #6 (an example of a second network entity), or the indication information #4 indicates to add the network entity #6 as a secondary base station of the terminal device #3, where the network entity #6 is a base station to which the cell #1 belongs. The network entity #6 and the network entity #1 may be a same network entity, or may be different network entities. This is not limited in this application.

The adjustment manner for adjusting the transmit power of the cell #1 includes one or more of the following: whether to adjust the transmit power of the cell #1, an adjustment direction, and an adjustment range. The adjustment direction of adjusting the transmit power of the cell #1 may include: increasing the transmit power of the cell #1 and decreasing the transmit power of the cell #1. Increasing the transmit power of the cell #1 may further include adjusting the cell #1 from an inactive state to an enabled state. Decreasing the transmit power of the cell #1 may further include adjusting the cell #1 from an enabled state to an inactive state. The adjustment range may include: The transmit power of the cell #1 is adjusted to a specific range, for example, the transmit power of the cell #1 is adjusted to a range of 30 dBm to 40 dBm.

Optionally, when the cell #1 is in an inactive state or the transmit power is reduced, the network entity #1 determines, based on the information #2, the adjustment manner for adjusting the transmit power of the cell #1. For example, when the cell #1 is in an inactive state, the network entity #1 determines, based on the information #2, whether to enable the cell #1. When the cell #1 is in a state in which the transmit power is reduced, the network entity #1 determines, based on the information #2, whether to increase the transmit power of the cell #1.

A method for determining, by the network entity #1 based on the information #2, the adjustment manner for adjusting the transmit power of the cell #1 is not limited in this embodiment of this application.

In a possible implementation, the network entity #1 first predicts signal quality information of the terminal device #3 in the cell #1 based on the information #1 and a signal measurement result of the terminal device #3 in the cell #2; and then determines, based on the signal quality information of the terminal device #3 in the cell #1, the adjustment manner for adjusting the transmit power of the cell #1. The signal quality information of the terminal device #3 in the cell #1 includes: signal quality of the terminal device #3 in the cell #1 and/or whether the signal quality of the terminal device #3 in the cell #1 exceeds a preset threshold #4 (an example of a first preset threshold).

For example, if the information #1 includes the signal measurement results of the terminal device in the cell #1 and the cell #2, the network entity #1 determines, based on the signal measurement results of the terminal device in the cell #1 and the cell #2, a relationship (denoted as the relationship #2) of the signal measurement results of the terminal device in the cell #1 and the cell #2, and then predicts the signal quality information of the terminal device #3 in the cell #1 based on a signal measurement result of the terminal device #3 in the cell #2 and the relationship #2.

For example, if signal quality of the terminal device #3 in the cell #1 that is predicted by the network entity #1 is better than signal quality of the terminal device #3 in the cell #2, the network entity #1 may determine to adjust the transmit power of the cell #1. For another example, if the signal quality of the terminal device #3 in the cell #1 that is predicted by the network entity #1 exceeds the preset threshold #4, the network entity #1 may determine to adjust the transmit power of the cell #1. For another example, the network entity #1 determines, based on the predicted signal quality information of the terminal device #3 in the cell #1, that signal quality of K terminal devices #3 exceeds the preset threshold #4, and K is greater than a preset threshold. In this case, the network entity #1 determines to adjust the transmit power of the cell #1. K is a positive integer.

Optionally, the network entity #1 predicts the signal quality information of the terminal device #3 in the cell #1 based on a network model #3 (an example of a first network model). An input of the network model #3 includes the information #1 and the signal measurement result of the terminal device #3 in the cell #2, and an output parameter of the network model #3 includes the signal quality information of the terminal device #3 in the cell #1. The network model #3 may be a neural network model, an AI algorithm, or an ML algorithm. This is not limited in this application.

Optionally, if the adjustment manner for adjusting the transmit power of the cell #1 includes the adjustment range, the network entity #1 may further consider transmit power information of the cell #1, where the transmit power information of the cell #1 includes one or more of the following: maximum transmit power of the cell #1, minimum transmit power of the cell #1, and current transmit power of the cell #1. That is, the network entity #1 may determine, based on the signal quality information of the terminal device #3 in the cell #1 and the transmit power information of the cell #1, the adjustment range for adjusting the transmit power of cell #1. Optionally, if the network entity #1 is not the base station to which the cell #1 belongs, the method 200 may further include: The network entity #1 obtains the transmit power information of the cell #1 from the network entity #6, where the network entity #6 is the base station to which the cell #1 belongs.

In another possible implementation, the network entity #1 first predicts the signal quality information of the terminal device #3 in the cell #1 based on the information #1 and the signal measurement result of the terminal device #3 in the cell #2; and then determines, based on the signal quality information of the terminal device #3 in the cell #1 and information #3 (an example of third information), the adjustment manner for adjusting the transmit power of the cell #1.

The information #3 includes one or more of the following: a quantity of terminal devices #3, a service model of the terminal device #3, and indication information #4. The quantity of terminal devices #3 may be a quantity of terminal devices #3 corresponding to signal measurement results in the cell #2 that are obtained by the network entity #1. For example, if the network entity #1 obtains signal measurement results of L terminal devices #3 in the cell #2, the quantity of terminal devices #3 may be L. Alternatively, the quantity of terminal devices #3 may be a quantity of terminal devices #3 whose predicted signal quality in the cell #1 exceeds the preset threshold #4. For example, the network entity obtains signal measurement results of L terminal devices #3 in the cell #2, and determines, based on predicted signal quality information of the L terminal devices #1 in the cell #1, that signal quality of K terminal devices #3 exceeds the preset threshold #4. In this case, the quantity of terminal devices may be K.

Optionally, the network entity #1 determines, based on a network model #4 (an example of a second network model), the adjustment manner for adjusting the transmit power of the cell #1. An input of the network model #4 includes the predicted signal quality information of the terminal device #3 in the cell #1 and the information #3 (an example of the third information), and an output parameter of the network model #4 includes one or more of the following: whether to perform adjustment, an adjustment direction, and an adjustment range. For example, the output parameter of network model #4 is to increase the transmit power to 40 dBm. The network model #4 may be a neural network model, an AI algorithm, or an ML algorithm. This is not limited in this application.

Optionally, if the adjustment manner for adjusting the transmit power of the cell #1 includes the adjustment range, the network entity #1 may further consider transmit power information of the cell #1, where the transmit power information of the cell #1 includes one or more of the following: maximum transmit power of the cell #1, minimum transmit power of the cell #1, and current transmit power of the cell #1. That is, the information #3 may include the transmit power information of the cell #1. Optionally, if the network entity #1 is not the base station to which the cell #1 belongs, the method 200 may further include: The network entity #1 obtains the transmit power information of the cell #1 from the network entity #6, where the network entity #6 is the base station to which the cell #1 belongs.

In still another possible implementation, the information #2 further includes one or more of the following: a quantity of terminal devices #3, a service model of the terminal device #3, and indication information #4. The network entity #1 determines, based on the information #2, the adjustment manner for adjusting the transmit power of the cell #1.

Optionally, the network entity #1 determines, based on a network model #5 (an example of a third network model), the adjustment manner for adjusting the transmit power of the cell #1. An input of the network model #5 includes the information #2, and an output parameter of the network model #5 includes one or more of the following: whether to perform adjustment, an adjustment direction, and an adjustment range. For example, the output parameter of network model #5 is to increase the transmit power to 40 dBm. The network model #5 may be a neural network model, an AI algorithm, or an ML algorithm. This is not limited in this application.

Optionally, if the adjustment manner for adjusting the transmit power of the cell #1 includes the adjustment range, the network entity #1 may further consider transmit power information of the cell #1, where the transmit power information of the cell #1 includes one or more of the following: maximum transmit power of the cell #1, minimum transmit power of the cell #1, and current transmit power of the cell #1. That is, the information #2 may include the transmit power information of the cell #1. Optionally, if the network entity #1 is not the base station to which the cell #1 belongs, the method 200 may further include: The network entity #1 obtains the transmit power information of the cell #1 from the network entity #6, where the network entity #6 is the base station to which the cell #1 belongs.

In this embodiment of this application, the network entity #1 may determine, based on the obtained signal measurement result related to the terminal device and a signal measurement result of a terminal device (that is, the terminal device #3) currently served by a base station in the cell #2, the adjustment manner for adjusting the transmit power of the first cell. In this way, when the first cell does not send a downlink reference signal or transmit power of the downlink reference signal is relatively low, even if signal quality of the terminal device #3 in the cell #1 cannot be accurately measured, the adjustment manner for adjusting the transmit power of the first cell can be determined.

Optionally, if the network entity #1 determines to adjust the transmit power of the cell #1, and the network entity #1 is a coverage-layer base station or an OAM, or the network entity #1 is not a base station to which the cell #1 belongs, the method 200 may further include S240 and S250.

S240: The network entity #1 sends indication information #5 to the network entity #6.

The network entity #6 is a base station to which the cell #1 belongs, and the indication information #5 (an example of fifth indication information) indicates one or more of the following: to adjust the transmit power of the cell #1 by the network entity #6, an adjustment direction, and an adjustment range. For example, the indication information #5 indicates the network entity #6 to adjust the cell #1 from an inactive state to an enabled state. For another example, the indication information #5 indicates the network entity #6 to increase the transmit power of the cell #1. For another example, the indication information #5 indicates the network entity #6 to adjust the transmit power of the cell #1 to a range of 30 dBm to 40 dBm.

Optionally, the indication information #5 further includes an identifier of the cell #1.

It should be understood that this step is an optional step. If the network entity #1 determines not to adjust the transmit power of the cell #1, S240 is not performed in the method 200. Alternatively, if the network entity #1 is the base station to which the first cell belongs, S240 is not performed in the method 200.

S250: The network entity #1 receives feedback information from the network entity #6.

Details are as follows. After the network entity #6 adjusts the transmit power of the cell #1 based on the indication information #5, the network entity #6 sends the feedback information to the network entity #1. The feedback information includes related information of the terminal device #4. For example, the feedback information includes a quantity of terminal devices #4, a throughput of the terminal device #4, a throughput rate of the terminal device #4, and a signal measurement result related to the terminal device #4. The terminal device #4 is a terminal device that accesses or is handed over to the network entity #6, or adds the network entity #6 as a secondary base station after the network entity #6 adjusts the transmit power of the cell #1. For example, the terminal device #4 may be handed over from the network entity #1 to the network entity #6, or adds the network entity #6 as a secondary base station. For example, the terminal device #4 is a terminal device, in the terminal device #3, that is handed over to the network entity #6 or that adds the network entity #6 as a secondary base station. The feedback information may alternatively include whether the terminal device #4 accesses or is handed over to the network entity #6, or whether the terminal device #4 adds the network entity #6 as a secondary base station.

It should be understood that this step is an optional step. For example, if S240 is not performed in the method 200, S250 is not performed in the method 200. For another example, if the network entity #6 does not receive the indication information #6, the network entity #6 does not send the feedback information to the network entity #1.

Optionally, before S250, the method 200 may further include: The network entity #1 sends the indication information #6 to the network entity #6, where the indication information #6 indicates the network entity #6 to send feedback information to the network entity #1 after adjusting the transmit power of the cell #1. Specifically, the indication information #6 further indicates the network entity #6 to send feedback information to the network entity #1 after t time units after the transmit power of the cell #1 is adjusted.

In this embodiment of this application, after adjusting the transmit power of the cell #1, the network entity #6 sends the feedback information to the network entity #1, so that the network entity #1 can learn information about the terminal device that is handed over to the network entity #6 or that adds the network entity #6 as a secondary base station after the transmit power of the cell #1 is adjusted. This helps the network entity #1 more accurately determine, based on the feedback information, the adjustment manner for adjusting the transmit power of the cell #1.

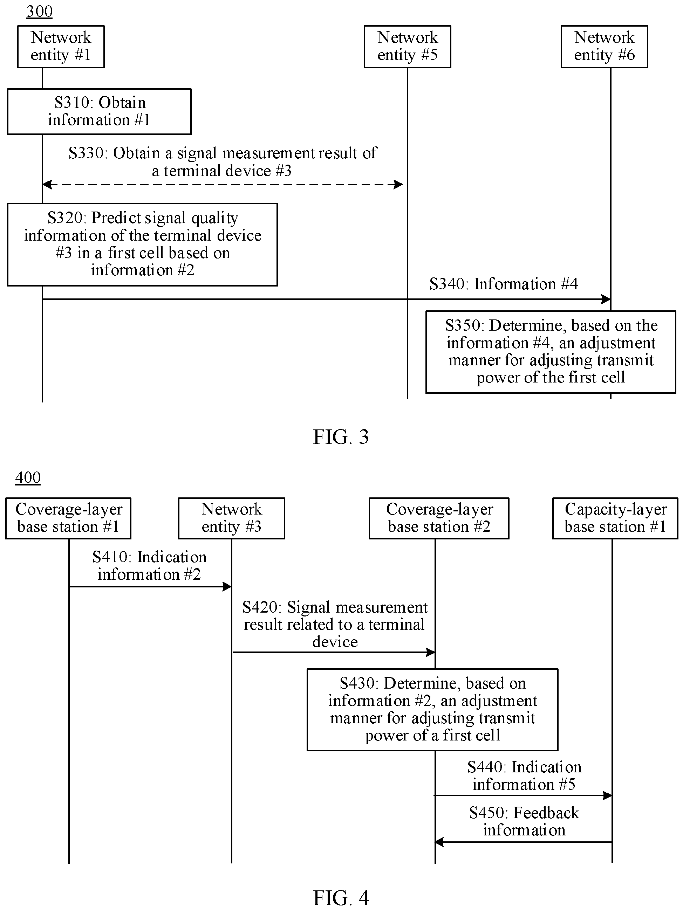

FIG. 3 is a schematic flowchart of a communication method 300 according to another embodiment of this application. As shown in FIG. 3, the method 300 may include S310 to S350.

S310: A network entity #1 obtains information #1.

The network entity #1 (an example of a first network entity) may be a base station, for example, may be a coverage-layer base station. The network entity #1 may alternatively be an OAM. The network entity #1 may alternatively be another entity. This is not limited in this application. The information #1 (an example of first information) includes any one of the following: signal measurement results of a terminal device in at least two cells, and a relationship of the signal measurement results of the terminal device in the at least two cells, where the at least two cells include a first cell and a second cell, and the second cell is a cell other than the first cell in the at least two cells. The first cell is a cell whose transmit power can be adjusted. For example, the first cell is a cell that can be deactivated.

For more descriptions about obtaining the information #1 by the network entity #1, refer to the descriptions in S210. For brevity, details are not described herein again.

S320: The network entity #1 predicts signal quality information of a terminal device #3 in the first cell based on information #2.

If the network entity #1 is a base station, the terminal device #3 (an example of a first terminal device) may be a terminal device connected to the network entity #1. For example, the terminal device #3 is a terminal device connected to the network entity #1 after a cell #1 is deactivated or transmit power of the cell #1 is reduced. If the network entity #1 is an OAM, the terminal device #3 may be a terminal device connected to a specific base station (for example, a network entity #5). For example, the terminal device #3 is a terminal device connected to the specific base station after the cell #1 is deactivated or the transmit power is reduced. There are one or more terminal devices #3.

When the terminal device #3 is not connected to the network entity #1, the method 300 may further include S330: The network entity #1 obtains a signal measurement result of the terminal device #3 from the network entity #5 (an example of a fourth network entity). The network entity #5 is a base station connected to the terminal device #3. For more descriptions about how the network entity #1 obtains the signal measurement result of the terminal device #3, refer to the foregoing descriptions in S230. For brevity, details are not described herein again.

The information #2 (an example of second information) includes the information #1 and a signal measurement result of the terminal device #3 in the second cell. The following uses an example in which the first cell includes the cell #1, an example in which the second cell includes a cell #2, and an example in which the information #1 includes signal measurement results (or a relationship of signal measurement results) of a terminal device in the cell #1 and the cell #2.

For example, if the information #1 includes the signal measurement results of the terminal device in the cell #1 and the cell #2, the network entity #1 determines, based on the signal measurement results of the terminal device in the cell #1 and the cell #2, a relationship (denoted as a relationship #2) of the signal measurement results of the terminal device in the cell #1 and the cell #2, and then predicts the signal quality information of the terminal device #3 in the cell #1 based on a signal measurement result of the terminal device #3 in the cell #2 and the relationship #2. The signal quality information of the terminal device #3 in the cell #1 includes: signal quality of the terminal device #3 in the cell #1 and/or whether the signal quality of the terminal device #3 in the cell #1 exceeds a preset threshold #4.

Optionally, the network entity #1 predicts the signal quality information of the terminal device #3 in the cell #1 based on a network model #3 (an example of a first network model). An input of the network model #3 includes the information #1 and the signal measurement result of the terminal device #3 in the cell #2, and an output parameter of the network model #3 includes the signal quality information of the terminal device #3 in the cell #1. The network model #3 may be a neural network model, an AI algorithm, or an ML algorithm. This is not limited in this application.

S340: The network entity #1 sends information #4 to a network entity #6.

The network entity #6 (an example of a second network entity) is a base station to which the cell #1 belongs. The information #4 (an example of fourth information) includes the signal quality information that is of the terminal device #3 in the cell #1 and that is obtained by the network entity #1 through prediction.

Optionally, the information #4 may further include one or more of the following: a quantity of terminal devices #3, a service model of the terminal device #3, and indication information #4 (an example of first indication information or third indication information). The quantity of terminal devices #3 may be a quantity of terminal devices #3 corresponding to signal measurement results in the cell #2 that are obtained by the network entity #1. For example, if the network entity #1 obtains signal measurement results of L terminal devices #3 in the cell #2, the quantity of terminal devices #3 may be L. Alternatively, the quantity of terminal devices #3 may be a quantity of terminal devices #3 whose predicted signal quality in the cell #1 exceeds the preset threshold #4. For example, the network entity obtains signal measurement results of L terminal devices #3 in the cell #2, and determines, based on predicted signal quality information of the L terminal devices #1 in the cell #1, that signal quality of K terminal devices #3 exceeds the preset threshold #4. In this case, the quantity of terminal devices may be K. The service model of the terminal device #3 may include a maximum rate, a minimum rate, a QoS parameter, possible duration of a service, and the like that are required by the terminal device #3. The indication information #4 indicates to hand over the terminal device #3 to the network entity #6, or the indication information #4 indicates to add the network entity #6 as a secondary base station of the terminal device #3.

S350: The network entity #6 determines, based on the information #4, an adjustment manner for adjusting the transmit power of the first cell.

The adjustment manner for adjusting the transmit power of the cell #1 includes one or more of the following: whether to adjust the transmit power of the cell #1, an adjustment direction, and an adjustment range. The adjustment direction of adjusting the transmit power of the cell #1 may include: increasing the transmit power of the cell #1 and decreasing the transmit power of the cell #1. Increasing the transmit power of the cell #1 may further include adjusting the cell #1 from an inactive state to an enabled state. Decreasing the transmit power of the cell #1 may further include adjusting the cell #1 from an enabled state to an inactive state. The adjustment range may include: The transmit power of the cell #1 is adjusted to a specific range, for example, the transmit power of the cell #1 is adjusted to a range of 30 dBm to 40 dBm.

Optionally, the network entity #6 determines, by using a network model #4 (an example of a second network model), the adjustment manner for adjusting the transmit power of the cell #1. An input of the network model #4 includes the information #4, and an output parameter of the network model #4 includes one or more of the following: whether to perform adjustment, an adjustment direction, and an adjustment range. For example, the output parameter of network model #4 is to increase the transmit power to 40 dBm. The network model #4 may be a neural network model, an AI algorithm, or an ML algorithm. This is not limited in this application.

In this embodiment of this application, the network entity #1 may predict the signal quality information of the terminal device #3 in the cell #1 based on the obtained signal measurement result related to the terminal device and a signal measurement result of a terminal device (that is, the terminal device #1) currently served by a base station in the cell #2. In addition, the signal quality information of the terminal device #3 in the cell #1 is sent to the network entity #6, so that the network entity #6 can determine, based on the signal quality information of the terminal device #3 in the cell #1, the adjustment manner for adjusting the transmit power of the cell #1. In addition, in a process of determining the adjustment manner for adjusting the transmit power of the cell #1, the network entity #6 may further consider a reason why the terminal device #3 enters the network entity #6 (that is, whether the terminal device #3 is handed over to the network entity #6 or uses the network entity #6 as a secondary base station).

With reference to FIG. 4, the following describes a communication method provided in an embodiment of this application by using an example in which the network entity #1 is a coverage-layer base station #2. As shown in FIG. 4, the method 400 may include S410 to S450. The following describes the steps in detail.

S410: A coverage-layer base station #1 sends indication information #2 to at least one network entity #3.

The indication information #2 (an example of second indication information) indicates the at least one network entity #3 (an example of a third network entity) to report a signal measurement result related to a terminal device to the coverage-layer base station #1. For more descriptions of the indication information #2, refer to the descriptions in the foregoing method 200. For brevity, details are not described herein again.

The coverage-layer base station #2 and the coverage-layer base station #1 may be a same base station, that is, S410 may be replaced with: The coverage-layer base station #2 sends indication information #2 to at least one network entity #3.

The coverage-layer base station #2 and the coverage-layer base station #1 may alternatively be different base stations. If the indication information #2 indicates the at least one network entity #3 to report a signal measurement result related to a terminal device to the coverage-layer base station #2, the coverage-layer base station #2 may be determined through negotiation by a plurality of coverage-layer base stations, or may be configured by an OAM. That is, when there are a plurality of coverage-layer base stations, the plurality of coverage-layer base stations may determine, through negotiation, one coverage-layer base station, which is configured to collect a signal measurement result related to a terminal device, or the OAM configures a coverage-layer base station configured to collect a signal measurement result related to a terminal device.

When the coverage-layer base station #2 and the coverage-layer base station #1 are different base stations, the indication information #2 may include an identifier of the coverage-layer base station #2, to indicate the at least one network entity #3 to report a measurement result related to a terminal device to the coverage-layer base station #2.

The network entity #3 may be a base station, for example, may be a capacity-layer base station, or may be a coverage-layer base station adjacent to a capacity-layer base station.

S420: The at least one network entity #3 sends the signal measurement result related to a terminal device to the coverage-layer base station #2.

The at least one network entity #3 sends the signal measurement result related to a terminal device to the coverage-layer base station #2 based on the received indication information #2.

S430: The coverage-layer base station #2 determines, based on information #2, an adjustment manner for adjusting transmit power of a first cell.

The information #2 (an example of second information) includes information #1 (an example of first information) and a signal measurement result of a terminal device #3 (an example of a first terminal device) in a second cell. The information #1 includes the measurement result related to a terminal device that is received by the coverage-layer base station #2 from the at least one network entity #3. Specifically, the information #1 includes signal measurement results of the terminal device in at least two cells, and the at least two cells include the first cell and the second cell. The first cell is a cell whose transmit power can be adjusted. For example, the first cell is a cell that can be deactivated. The second cell is a cell other than the first cell in the at least two cells.

The terminal device #3 may be a terminal device connected to the coverage-layer base station #2, or the terminal device #3 may be a terminal device connected to the coverage-layer base station #1. If the terminal device #3 is a terminal device connected to the coverage-layer base station #1, the method 400 further includes: The coverage-layer base station #1 sends a signal measurement result of the terminal device #3 to the coverage-layer base station #2, where the signal measurement result of the terminal device #3 includes the signal measurement result of the terminal device #3 in the second cell.

For more descriptions of S430, refer to the foregoing descriptions of S220. For brevity, details are not described herein again.

S440: The coverage-layer base station #2 sends indication information #5 to a capacity-layer base station #1.

The indication information #5 (an example of fifth indication information) indicates the capacity-layer base station #1 to adjust the transmit power of the first cell. The capacity-layer base station #1 is a base station to which the first cell belongs. Specifically, when determining to adjust the transmit power of the first cell, the coverage-layer base station #2 sends the indication information #5 to the capacity-layer base station.

S450: The capacity-layer base station #1 sends feedback information to the coverage-layer base station #2.

Specifically, after the capacity-layer base station #1 adjusts the transmit power of the first cell based on the indication information #5, the capacity-layer base station #1 sends the feedback information to the coverage-layer base station #2. The feedback information includes related information of a terminal device #4. For example, the feedback information includes a quantity of terminal devices #4, a throughput of the terminal device #4, a throughput rate of the terminal device #4, and a signal measurement result related to the terminal device #4. The terminal device #4 is a terminal device that accesses or is handed over to the capacity-layer base station #1 or adds the capacity-layer base station #1 as a secondary base station after the capacity-layer base station #1 adjusts the transmit power of the first cell. For example, the terminal device #4 may be handed over from the coverage-layer base station #2 to the capacity-layer base station #1, or adds the capacity-layer base station #1 as a secondary base station. For example, the terminal device #4 is a terminal device, in the terminal device #3, that is handed over to the capacity-layer base station #1 or adds the capacity-layer base station #1 as a secondary base station. The feedback information may alternatively include whether the terminal device #4 accesses or is handed over to the capacity-layer base station #1, or whether the terminal device #4 adds the capacity-layer base station #1 as a secondary base station.

For more descriptions of S440 and S450, refer to the foregoing descriptions of S240 and S250. For brevity, details are not described herein again.

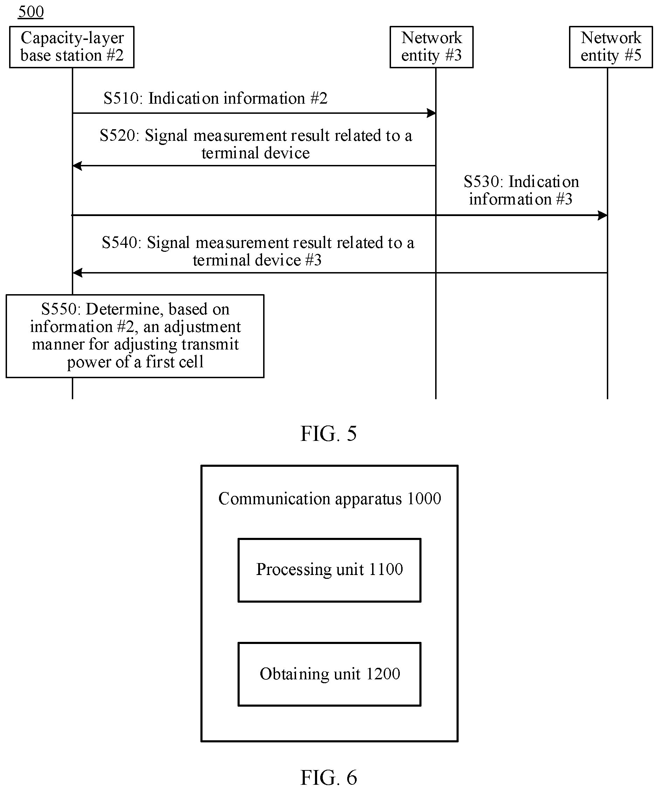

With reference to FIG. 5, the following describes a communication method provided in an embodiment of this application by using an example in which the network entity #1 is the capacity-layer base station #2. As shown in FIG. 5, the method 500 may include S510 to S550. The following describes the steps in detail.

S510: The capacity-layer base station #2 sends indication information #2 to at least one network entity #3.

The indication information #2 (an example of second indication information) indicates the at least one network entity #3 (an example of a third network entity) to report a signal measurement result related to a terminal device to the coverage-layer base station #1. For more descriptions of the indication information #2, refer to the descriptions in the foregoing method 200. For brevity, details are not described herein again.

The network entity #3 may be a coverage-layer base station or a capacity-layer base station.

S520: The at least one network entity #3 sends a signal measurement result related to a terminal device to the capacity-layer base station #2.

The at least one network entity #3 sends the signal measurement result related to a terminal device to the capacity-layer base station #2 based on the received indication information #2.

S530: The capacity-layer base station #2 sends indication information #3 to a network entity #5 (an example of a fourth network entity).

The indication information #3 (an example of third indication information) indicates the network entity #5 to report a signal measurement result related to a terminal device #3 (an example of a first terminal device), and the signal measurement result of the terminal device #3 includes a signal measurement result of the terminal device #3 in a second cell. For more descriptions of the indication information #3, refer to the foregoing descriptions in the method 200.

The network entity #5 is a coverage-layer base station around the capacity-layer base station #2. The network entity #5 may be the same as the at least one network entity #3, or may be different from the at least one network entity #3. This is not limited in this application.

Specifically, the capacity-layer base station #2 sends the indication information #3 to the network entity #5 after a first cell enters an inactive state or transmit power of the first cell is reduced.

Optionally, before S530, the method 500 may further include: The network entity #5 sends a request message #4 to the capacity-layer base station #2, where the request message #4 is used to request to hand over the terminal device #3 to the capacity-layer base station #2, or the request message #4 is used to request to add the capacity-layer base station #2 as a secondary base station of the terminal device #3. The terminal device #3 is a terminal device connected to the network entity #5. Further, when receiving the request message #4, the capacity-layer base station #2 sends the indication information #3 to the network entity #5.

Optionally, before S530, the method 500 may further include: The network entity #5 sends indication information #6 to the capacity-layer base station #2, where the indication information #6 indicates that load of the network entity #5 is excessively high, or the indication information #6 may include an identifier of a cell under the network entity #5, and is used to indicate that load of the cell is excessively high. The terminal device #3 is a terminal device connected to the network entity #5. Further, when receiving the indication information #6, the capacity-layer base station #2 sends the indication information #3 to the network entity #5.

S540: The network entity #5 sends the signal measurement result related to the terminal device #3 to the capacity-layer base station #2. The signal measurement result related to the terminal device #3 includes the signal measurement result of the terminal device #3 in the second cell.

S550: The capacity-layer base station #2 determines, based on information #2, an adjustment manner for adjusting the transmit power of the first cell.

The information #2 (an example of second information) includes information #1 (an example of first information) and the signal measurement result of the terminal device #3 in the second cell. The information #1 includes a measurement result related to a terminal device that is received by the capacity-layer base station #2 from the at least one network entity #3. Specifically, the information #1 includes signal measurement results of the terminal device in at least two cells, and the at least two cells include the first cell and the second cell. The first cell is a cell whose transmit power can be adjusted. For example, the first cell is a cell that can be deactivated. The second cell is a cell other than the first cell in the at least two cells.

For more descriptions of S550, refer to the foregoing descriptions of S220. For brevity, details are not described herein again.

The foregoing describes in detail the communication method provided in the embodiments of this application with reference to FIG. 2 to FIG. 5. The following describes in detail a communication apparatus provided in an embodiment of this application with reference to FIG. 6 to FIG. 8.

FIG. 6 is a schematic block diagram of a communication apparatus according to an embodiment of this application. As shown in FIG. 6, the communication apparatus 1000 may include a processing unit 1100 and an obtaining unit 1200.

In a possible design, the communication apparatus 1000 may be corresponding to the network entity in the foregoing method embodiment. For example, the communication apparatus 1000 may be a network entity, or a component (such as a chip or a chip system) configured in the network entity.

It should be understood that the communication apparatus 1000 may correspondingly implement corresponding functions of the network entity #1 in the methods 200 to 500 in the embodiments of this application. The communication apparatus 1000 may be the network entity #1, or the communication apparatus may be a component (for example, a chip or a circuit) that can be configured in the network entity #1, for example, the communication apparatus 1000 may include units configured to perform the method performed by the network entity #1 in the method 200 in FIG. 2, the method 300 in FIG. 3, the method 400 in FIG. 4, or the method 500 in FIG. 5. In addition, the units in the communication apparatus 1000 and the foregoing other operations and/or functions are respectively used to implement corresponding procedures of the method 200 in FIG. 2, the method 300 in FIG. 3, the method 400 in FIG. 4, or the method 500 in FIG. 5. It should be understood that a specific process in which the units perform the foregoing corresponding steps is described in detail in the foregoing method embodiment. For brevity, details are not described herein again.

In a possible implementation, the obtaining unit 1200 in the communication apparatus 1000 may be a transceiver unit, for example, may be implemented by using an input/output interface. The processing unit 1100 in the communication apparatus 1000 may be implemented by using a processor, a microprocessor, an integrated circuit, or the like integrated in the chip or chip system.

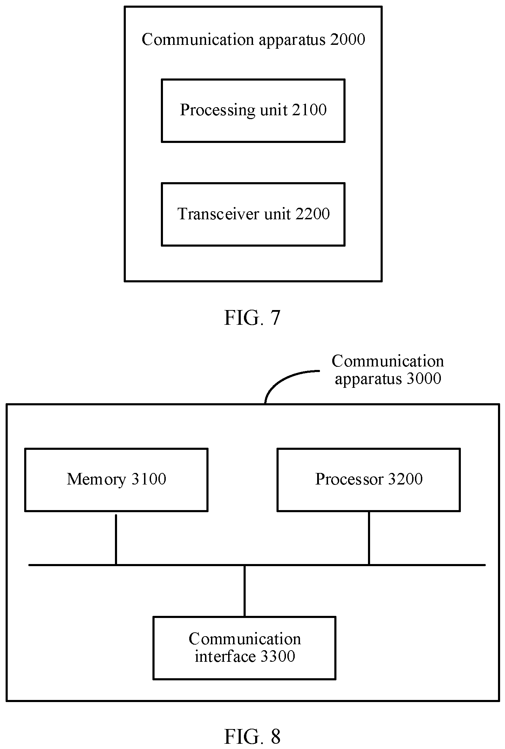

FIG. 7 is a schematic block diagram of a communication apparatus according to an embodiment of this application. As shown in FIG. 7, the communication apparatus 2000 may include a processing unit 2100 and a transceiver unit 2200.

In a possible design, the communication apparatus 2000 may be corresponding to the network entity in the foregoing method embodiment. For example, the communication apparatus 2000 may be a network entity, or a component (such as a chip or a chip system) configured in the network entity.

It should be understood that the communication apparatus 2000 may correspondingly implement corresponding functions of the network entity #3 in the methods 400 and 500 in the embodiments of this application. The communication apparatus 2000 may be the network entity #3, or the communication apparatus may be a component (for example, a chip or a circuit) that can be configured in the network entity #3. For example, the communication apparatus 2000 may include units configured to perform the method performed by the network entity #3 in the method 400 in FIG. 4 or the method 500 in FIG. 5. In addition, the units in the communication apparatus 2000 and the foregoing other operations and/or functions are respectively used to implement corresponding procedures of the method 400 in FIG. 4 or the method 500 in FIG. 5. It should be understood that a specific process in which the units perform the foregoing corresponding steps is described in detail in the foregoing method embodiment. For brevity, details are not described herein again.

It should be understood that the communication apparatus 2000 may correspondingly implement corresponding functions of the network entity #5 in the method 200, 300, or 500 in the embodiment of this application. The communication apparatus 2000 may be the network entity #5, or the communication apparatus may be a component (for example, a chip or a circuit) that can be configured in the network entity #5, for example, the communication apparatus 2000 may include units configured to perform the method performed by the network entity #2 in the method 200 in FIG. 2, the method 300 in FIG. 3, or the method 500 in FIG. 5. In addition, the units in the communication apparatus 2000 and the foregoing other operations and/or functions are respectively used to implement corresponding procedures of the method 200 in FIG. 2, the method 300 in FIG. 3, or the method 500 in FIG. 5. It should be understood that a specific process in which the units perform the foregoing corresponding steps is described in detail in the foregoing method embodiment. For brevity, details are not described herein again.

It should be understood that the communication apparatus 2000 may correspondingly implement corresponding functions of the network entity #6 in the methods 200 and 300 in the embodiments of this application. The communication apparatus 2000 may be the network entity #6, or the communication apparatus may be a component (for example, a chip or a circuit) that can be configured in the network entity #6. For example, the communication apparatus 2000 may include units configured to perform the method performed by the network entity #6 in the method 200 in FIG. 2 or the method 300 in FIG. 3. In addition, the units in the communication apparatus 2000 and the foregoing other operations and/or functions are respectively used to implement corresponding procedures of the method 200 in FIG. 2 or the method 300 in FIG. 3. It should be understood that a specific process in which the units perform the foregoing corresponding steps is described in detail in the foregoing method embodiment. For brevity, details are not described herein again.

In a possible design, the communication apparatus 2000 may be corresponding to the terminal device in the foregoing method embodiment, for example, may be a terminal device, or a component (such as a chip or a chip system) configured in the terminal device.

It should be understood that the communication apparatus 2000 may correspondingly implement corresponding functions of the terminal device in the method 200 in the embodiment of this application. The communication apparatus 2000 may be a terminal device, or the communication apparatus may be a component (for example, a chip or a circuit) that can be configured in the terminal device. For example, the communication apparatus 2000 may include units configured to perform the method performed by the terminal device in the method 200 in FIG. 2. In addition, the units in the communication apparatus 2000 and the foregoing other operations and/or functions are respectively used to implement corresponding procedures of the method 200 in FIG. 2. It should be understood that a specific process in which the units perform the foregoing corresponding steps is described in detail in the foregoing method embodiment. For brevity, details are not described herein again.

It should be further understood that, in a possible implementation, the transceiver unit 1200 in the communication apparatus 1000 may be implemented by using an input/output interface, and the processing unit 1100 in the communication apparatus 1000 may be implemented by using a processor, a microprocessor, an integrated circuit, or the like integrated in the chip or chip system.

FIG. 8 is a schematic block diagram of a communication apparatus according to another embodiment of this application. The communication apparatus 3000 shown in FIG. 8 may include: a memory 3100, a processor 3200, and a communication interface 3300. The memory 3100, the processor 3200, and the communication interface 3300 are connected by using an internal connection path. The memory 3100 is configured to store instructions, and the processor 3200 is configured to execute the instructions stored in the memory 3100, to control the input/output interface to receive/send a packet. Optionally, the memory 3100 may be coupled to the processor 3200 through an interface, or may be integrated with the processor 3200.

It should be noted that the communication interface 3300 uses a transceiver apparatus such as but not limited to a transceiver, to implement communication between the communication apparatus 3000 and another device or a communication network. The communication interface 3300 may further include an input/output interface (input/output interface).

During implementation, the steps in the foregoing method may be implemented by using a hardware integrated logic circuit in the processor 3200 or instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 3100. The processor 3200 reads information in the memory 3100, and completes the steps of the foregoing methods in combination with hardware of the processor 3200. To avoid repetition, details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should also be understood that in embodiments of this application, the memory may include a read-only memory and a random access memory, and provide instructions and data to the processor. A part of the processor may further include a non-volatile random access memory. For example, the processor may further store information about a device type.

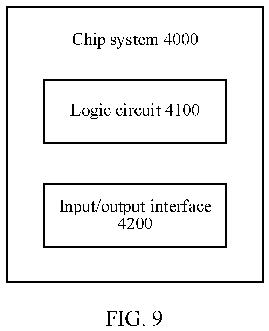

FIG. 9 is a schematic diagram of a chip system according to an embodiment of this application. The chip system herein may also be a system composed of circuits. The chip system 4000 shown in FIG. 9 includes: a logic circuit 4100 and an input/output interface (input/output interface) 4200, where the logic circuit may be coupled to the input interface, and transmit data (for example, first indication information) by using the input/output interface, to perform the methods in FIG. 2 to FIG. 5.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, the steps in the foregoing methods may be completed by an integrated logic circuit in a form of hardware or instructions in a form of software in the processor. The steps of the methods disclosed with reference to embodiments of this application may be directly implemented by a hardware processor, or may be implemented by using a combination of hardware in a processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in this embodiment of this application may be an integrated circuit chip and has a signal processing capability. In an implementation process, the steps in the foregoing method embodiments may be completed by an integrated logic circuit in a form of hardware or instructions in a form of software in the processor. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and the logical block diagrams that are disclosed in embodiments of this application. The general-purpose processor may be a microprocessor, or the processor may be any conventional processor or the like. The steps in the method disclosed with reference to embodiments of this application may be directly presented as being performed and completed by a hardware decoding processor, or performed and completed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By using an example description but not a restrictive description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these and any memory of another proper type.

According to the method provided in embodiments of this application, this application further provides a computer program product. The computer program product includes: computer program code, where when the computer program code runs on a computer, the computer is enabled to perform the method performed by each network entity in the embodiments shown in FIG. 2 to FIG. 5.

According to the method provided in embodiments of this application, this application further provides a computer-readable storage medium. The computer-readable storage medium stores program code. When the program code runs on a computer, the computer is enabled to perform the method performed by each network entity in the embodiments shown in FIG. 2 to FIG. 5.

According to the method provided in embodiments of this application, this application further provides a system, including one or more of the foregoing network entities.

The network entities in the foregoing apparatus embodiments are completely corresponding to the network entities in the method embodiments, and corresponding modules or units perform corresponding steps. For example, a transceiver unit (transceiver) performs receiving or sending steps in the method embodiment. Steps other than sending and receiving may be performed by a processing unit (processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, a computing device and an application that runs on a computing device may be both components. One or more components may reside within a process and/or a thread of execution, and a component may be located on a computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the internet interacting with another system by using a signal).

A person of ordinary skill in the art may be aware that, in combination with illustrative logical blocks (illustrative logical blocks) described in embodiments disclosed in this specification and steps (steps), this application may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

A person skilled in the art may clearly understand that, for the purpose of convenient and brief description, for a specific work process of the system, apparatus, and unit described above, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

In the foregoing embodiments, all or some functions of the functional units may be implemented by using software, hardware, firmware, or any combination thereof. When software is used for implementation, all or some of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first network entity, first information, wherein the first information comprises any one of the following: signal measurement results of a terminal device in at least two cells, and a relationship of the signal measurement results of the terminal device in the at least two cells, wherein the at least two cells comprise a first cell and a second cell; and
determining, by the first network entity based on second information, an adjustment manner for adjusting transmit power of the first cell, wherein the adjustment manner comprises one or more of the following: whether to perform adjustment, an adjustment direction, and an adjustment range, wherein the second information comprises the first information and a signal measurement result of a first terminal device in the second cell.

2. The method according to claim 1, wherein the determining, by the first network entity based on second information, an adjustment manner for adjusting transmit power of the first cell comprises:
predicting, by the first network entity, signal quality information of the first terminal device in the first cell based on the second information, wherein the signal quality information comprises signal quality and/or whether the signal quality exceeds a first preset threshold; and
determining, by the first network entity based on the signal quality information of the first terminal device in the first cell, the adjustment manner for adjusting the transmit power of the first cell.

3. The method according to claim 2, wherein the determining, by the first network entity based on the signal quality information of the first terminal device in the first cell, the adjustment manner for adjusting the transmit power of the first cell comprises:
determining, by the first network entity based on the signal quality information of the first terminal device in the first cell and third information, the adjustment manner for adjusting the transmit power of the first cell, wherein the third information comprises one or more of the following: a quantity of first terminal devices, a service model of the first terminal device, and first indication information, wherein the first indication information indicates to hand over the first terminal device to a second network entity, or the first indication information indicates to add the second network entity as a secondary network device of the first terminal device, and the second network entity is a network device to which the first cell belongs.

4. The method according to claim 1, wherein the second information further comprises one or more of the following: a quantity of first terminal devices, a service model of the first terminal device, and first indication information, wherein the first indication information indicates to hand over the first terminal device to a second network entity, or the first indication information indicates to add the second network entity as a secondary network device of the first terminal device, and the second network entity is a network device to which the first cell belongs.

5. The method according to any one of claims 1 to 4, wherein the obtaining, by a first network entity, first information comprises:
receiving, by the first network entity, the first information from at least one third network entity.

6. The method according to claim 5, wherein the method further comprises:
sending, by the first network entity, second indication information to the at least one third network entity, wherein the second indication information indicates the at least one third network entity to report the first information.

7. The method according to claim 6, wherein the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

8. The method according to claim 7, wherein the first preset condition comprises: a signal measurement result related to the third network entity exceeds a second preset threshold, and a signal measurement result related to the first network entity exceeds a third preset threshold.

9. The method according to any one of claims 1 to 8, wherein the method further comprises:
receiving, by the first network entity, the signal measurement result of the first terminal device in the second cell from a fourth network entity, wherein the fourth network entity is a network device accessed by the first terminal device.

10. The method according to claim 9, wherein the method further comprises:
sending, by the first network entity, third indication information to the fourth network entity, wherein the third indication information indicates the fourth network entity to report a signal measurement result of the first terminal device, and the signal measurement result of the first terminal device comprises the signal measurement result of the first terminal device in the second cell.

11. The method according to claim 10, wherein the method further comprises:
receiving, by the first network entity, the service model of the first terminal device and/or fourth indication information from the fourth network entity, wherein the fourth indication information indicates to hand over the first terminal device to the first network entity, or the fourth indication information indicates to add the first network entity as a secondary network device of the first terminal device.

12. The method according to claim 10 or 11, wherein the third indication information further indicates one or more of the following: indicates to report a signal measurement result that is of the first terminal device and that is related to a specific network entity or cell, indicates to report a signal measurement result of the first terminal device that meets a second preset condition, and indicates a periodicity for reporting a signal measurement result of the first terminal device.

13. The method according to claim 12, wherein the second preset condition comprises: a signal measurement result related to the fourth network entity does not exceed a fourth preset threshold.

14. The method according to any one of claims 1 to 9, wherein the method further comprises:
sending, by the first network entity, fifth indication information to the second network entity, wherein the fifth indication information indicates one or more of the following: to adjust the transmit power of the first cell, an adjustment direction, and an adjustment range, wherein the second network entity is a network device to which the first cell belongs.

15. The method according to claim 14, wherein the method further comprises:
receiving, by the first network entity, feedback information from the second network entity, wherein the feedback information comprises information about a second terminal device, and the second terminal device is a terminal device that is handed over to the second network entity or adds the second network entity as a secondary network device after the transmit power of the first cell is adjusted.

16. The method according to claim 15, wherein the second terminal device is a terminal device handed over from the first network entity to the second network entity, or the second terminal device is a terminal device that accesses the first network entity and adds the second network entity as a secondary network device.

17. A communication method, comprising:
obtaining, by a first network entity, first information, wherein the first information comprises any one of the following: signal measurement results of a terminal device in at least two cells, and a relationship of the signal measurement results of the terminal device in the at least two cells, wherein the at least two cells comprise a first cell and a second cell;
predicting, by the first network entity, signal quality information of a first terminal device in the first cell based on second information, wherein the second information comprises the first information and a signal measurement result of the first terminal device in the second cell, and the signal quality information comprises signal quality and/or whether the signal quality exceeds a first preset threshold; and
sending, by the first network entity, fourth information to a second network entity, wherein the fourth information comprises the signal quality information of the first terminal device in the first cell, the fourth information is used to determine an adjustment manner for adjusting transmit power of the first cell, and the adjustment manner comprises one or more of the following: whether to perform adjustment, an adjustment direction, and an adjustment range.

18. The method according to claim 17, wherein the fourth information further comprises one or more of the following: a quantity of first terminal devices, a service model of the first terminal device, and first indication information, wherein the first indication information indicates to hand over the first terminal device to the second network entity, or the first indication information indicates to add the second network entity as a secondary network device of the first terminal device.

19. The method according to claim 17 or 18, wherein the obtaining, by a first network entity, first information comprises:
receiving, by the first network entity, the first information from at least one third network entity.

20. The method according to claim 19, wherein the method further comprises:
sending, by the first network entity, second indication information to the at least one third network entity, wherein the second indication information indicates the at least one third network entity to report the first information.

21. The method according to claim 20, wherein the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

22. The method according to claim 21, wherein the first preset condition comprises: a signal measurement result related to the second network entity exceeds a second preset threshold, and a signal measurement result related to the first network entity exceeds a third preset threshold.

23. The method according to any one of claims 17 to 22, wherein the method further comprises:
receiving, by the first network entity, the signal measurement result of the first terminal device in the second cell from a fourth network entity, wherein the fourth network entity is a network device accessed by the first terminal device.

24. A communication method, comprising:
receiving, by a second network entity, fourth information from a first network entity, wherein the fourth information comprises signal quality information of a first terminal device in a first cell, the signal quality information of the first terminal device in the first cell is predicted based on second information, the second information comprises first information and a signal measurement result of the first terminal device in a second cell, the signal quality information comprises signal quality and/or whether the signal quality exceeds a first preset threshold, and the first information comprises any one of the following: signal measurement results of a terminal device in at least two cells, and a relationship of the signal measurement results of the terminal device in the at least two cells, wherein the at least two cells comprise the first cell and the second cell; and
determining, by the second network entity based on the fourth information, an adjustment manner for adjusting transmit power of the first cell, wherein the adjustment manner comprises one or more of the following: whether to perform adjustment, an adjustment direction, and an adjustment range.

25. The method according to claim 24, wherein the fourth information further comprises one or more of the following: a quantity of first terminal devices, a service model of the first terminal device, and first indication information, wherein the first indication information indicates to hand over the first terminal device to the second network entity, or the first indication information indicates to add the second network entity as a secondary network device of the first terminal device.

26. The method according to claim 24 or 25, wherein the method further comprises:
receiving, by the second network entity, second indication information, wherein the second indication information indicates the second network entity to report the first information; and
sending, by the second network entity, the first information to the first network entity.

27. The method according to claim 26, wherein the second indication information further indicates one or more of the following: indicates to report a signal measurement result that is of a terminal device and that is related to a specific network entity or cell, indicates to report a signal measurement result that is of a terminal device and that meets a first preset condition, or indicates a periodicity for reporting a signal measurement result of a terminal device.

28. The method according to claim 27, wherein the first preset condition comprises: a signal measurement result related to the second network entity exceeds a second preset threshold, and a signal measurement result related to the first network entity exceeds a third preset threshold.

29. A communication apparatus, comprising a unit configured to implement the method according to any one of claims 1 to 23.

30. A communication apparatus, comprising a unit configured to implement the method according to any one of claims 24 to 28.

31. A computer-readable storage medium, wherein the computer-readable medium stores a computer program, and when the computer program runs on a computer, the computer is enabled to perform the method according to any one of claims 1 to 28.

32. A computer program product, wherein the computer program product comprises a computer program, and when the computer program is run on a computer, the computer is enabled to perform the method according to any one of claims 1 to 28.
